# EUROPEAN PATENT SPECIFICATION

(11) **EP 1 813 413 B1**
(45) Date of publication and mention of the grant of the patent: **10.06.2020**
(21) Application number: 05806104.5
(22) Date of filing: 14.11.2005
(51) Int. Cl.: B29C 45/82, B29C 45/17, B29C 45/67, B29C 45/68

(54) **INJECTION MOLDING MACHINE, PLASTICIZING MOVEMENT DEVICE, AND NOZZLE TOUCH METHOD**
SPRITZGIESSMASCHINE, PLASTIFIZIERBEWEGUNGSVORRICHTUNG UND DÜSENKONTAKTVERFAHREN
MACHINE A MOULER PAR INJECTION, DISPOSITIF DE MOUVEMENT DE PLASTIFICATION ET PROCEDE DE MANIPULATON DE BUSE

(30) Priority: 17.11.2004 JP 2004333484
(43) Date of publication of application: 01.08.2007
(73) Proprietor: SUMITOMO HEAVY INDUSTRIES, LTD., Shinagawa-ku, Tokyo 141-8686 (JP)
(72) Inventor: HAYAKAWA, Masahiro, Chiba-shi, Chiba 2630001 (JP); KOSAKA, Mitsuhiro, Chiba-shi, Chiba 2630001 (JP)
(74) Representative: Wagner, Karl H.
(86) International application number: PCT/JP2005/020852
(87) International publication number: WO 2006/054522

(56) References cited:
- DE-A1- 10 242 289
- JP-A- 4 031 023
- JP-A- 4 031 023
- JP-A- 8 132 471
- JP-A- 8 187 753
- JP-A- 11 019 997
- JP-A- 2002 113 757
- JP-U- 2 064 021
- JP-U- 2 135 217

## Description

### TECHNICAL FIELD

The present invention relates to molding machines and, more particularly, to an injection molding machine having a liquid-pressure actuator for driving a movable part by a liquid pressure.

### BACKGROUND ART

Conventionally, a hydraulic cylinder is used as an actuator for driving a movable part in a molding machine such as an injection molding machine. An injection molding machine is equipped with an actuator for moving an injection apparatus, an actuator for driving a mold-clamp apparatus or the like. A hydraulic cylinder is used as such an actuator.

An injection molding machine using an electric actuator consisting of an electric motor and a rotation/reciprocation converting machine instead of a hydraulic cylinder has been developed. However, there is a demand to use a hydraulic actuator so as to take a merit of hydraulic drive such that a large thrust can be obtained with a small size.

In order to have a hydraulic cylinder to operate, it is necessary to install a hydraulic pump as a hydraulic pressure source on a molding machine and piping must be provided from the hydraulic pump to a hydraulic cylinder. Since a high-pressure is built inside the hydraulic pressure pipe, normally, a metal pipe such as a copper pipe or the like is used as a hydraulic pressure pipe. Such a pipe lacks flexibility. Thus, when a hydraulic cylinder is fixed to a movable part and the hydraulic cylinder is moved together with the movable part, it is necessary to make a pipe to the hydraulic cylinder to be a flexible hose. That is, a pipe is made to follow a movement or rotation of the movable part by arranging the hydraulic pump in a part other than the movable part so as to supply an hydraulic pressure from the hydraulic pump to the hydraulic cylinder through the flexible hose.

As an example in which a hydraulic pump and a hydraulic actuator are connected using a flexible hose, there is suggested an electric injection molding machine in which a hydraulic drive unit including a hydraulic pump and a hydraulic control circuit is arranged in a space under an injection apparatus and is connected to a hydraulic actuator of the injection apparatus by a relay hose having flexibility (for example, refer to JP 2003-291174 A).

Moreover, as an example of a plasticizer moving apparatus in the above-mentioned electric injection molding machine, there is a plasticizer moving apparatus which moves an injection apparatus (plasticizer) by a moving mechanism which acquires a thrust force by a ball screw shaft driven by a reducer equipped electric motor (motor) and a ball nut being engaged with that. The injection apparatus has a cylinder that melts a resin and a screw for metering the melted resin in the cylinder and discharging from a nozzle so as to inject and fills the melted resin into a mold by pressing the nozzle onto a resin supply part of the mold.

Pressing the nozzle onto the mold is referred to as a nozzle touch, and a pressing force of the nozzle onto the mold when carrying out the nozzle touch is referred to as a nozzle touch pressure. When injecting and filling the melted resin into the mold, a nozzle touch pressure of such a magnitude that does not yield to the injection pressure since the melted resin is pressurized at a high-pressure. In the above-mentioned plasticizer driven by the electric motor and the ball screw, a nozzle touch pressure is acquired by an elastic deformation force of a spring by pressing the injection apparatus via the spring by moving the injection apparatus toward the mold by driving the electric motor.

Here, the nozzle touch pressure is required to be a high-pressure, for example, in a resin filling process and a pressure-holding process when the mold is closed. On the other hand, when the mold is open such as at a time of taking a molded product or in a resin-metering process, the nozzle touch pressure is not required to be a high-pressure, and the nozzle touch pressure must be reduced so as to prevent deformation of the mold due to the nozzle touch pressure. That is, since a press force by a movable mold is not exerted on a stationary mold while the mold is open, there is happen a problem such as deformation of the stationary mold when nozzle touch pressure to the stationary mold is high, and, thereby, it is required to reduce a nozzle touch pressure so as to avoid such a problem. Such a reduction in the nozzle touch pressure is referred to as "depressurization".

Additionally, depending on the conditions, there may happen "a stringiness phenomenon", in which an insufficiently solidified resin near the nozzle is not separated from a molded product and in a stringiness state when taking out the molded product by opening the mold while maintaining a nozzle touch. Accordingly, in order to prevent generation of the "stringiness phenomenon", a molding method so called "setback molding" may be used. In the "setback molding" the nozzle touch is cancelled mechanically by moving the injection apparatus rearward in processes other than the filling process and the pressure-holding process so as to separate a resin in a nozzle part and a resin inside the mold from each other to prevent the "stringiness phenomenon".

As mentioned above, when performing continuous molding, the nozzle touch pressure is repeatedly changed between the high-pressure when filling a resin and a low-pressure or an atmospheric pressure when the mold is open.

DE 102 42 289 A1 was used as a basis for the preamble of claim 1 and discloses a method and injection unit for controlled application of an injection molding nozzle.

Moreover, attention is drawn to JP 2000-71287 A.

### DISCLOSURE OF THE INVENTION

### PROBLEMS TO BE SOLVED BY THE INVENTION

When a hydraulic pump unit including a hydraulic pump and a hydraulic actuator are arranged in locations separate from each other and are connected to each other using a flexible hose or a pipe, there is a problem in that the pipe or the flexible hose must be removed when performing a maintenance work. Additionally, there is a problem that it is hard to perform a maintenance work of the molding machine since the flexible hose and the pipe form obstacles.

Further, since a length of piping including the flexible hose becomes long and there is a large pressure loss generated in the piping, there also is a problem in that a hydraulic pump having a capacity larger than a hydraulic pump having a capacity suitable for operating the hydraulic actuator is required.

Moreover, when obtaining a nozzle touch pressure using an elastic deformation force of a spring as mentioned above, in order to change the nozzle touch pressure, a pressing force of the spring is changed by driving an electric motor to rotate a ball screw shaft and move a ball screw nut. In a case of continuous molding, such a change in a nozzle touch pressure is performed in each cycle of the molding. Therefore, the ball screw nut reciprocally moves repeatedly at a fixed location on the ball screw shaft, which causes a problem that the ball screw shaft is worn locally and service life thereof is shortened.

Additionally, a nozzle touch pressure cannot be changed largely in a short time due to low response since the drive mechanism according to the ball screw uses a compression of a spring. Moreover, it is difficult to control the elastic deformation force of the spring precisely, and it is impossible to change the nozzle touch pressure with good accuracy in a short time. Further, there is a problem that the service life of the spring is short since the spring is repeatedly compressed.

The present invention was made in view of the above-mentioned problems, and it is an object of the present invention to provide an injection molding machine, which improves ease of maintenance and improves reliability of a hydraulic drive part by arranging a hydraulic actuator and a hydraulic pump unit adjacent to each other so as to make a hydraulic pipe as short as possible.

Moreover, is it an object of the present invention to provide an electric injection molding machine having a plasticizer moving apparatus and a nozzle touch method, which can control a nozzle touch pressure with high accuracy and high response in a simple structure using a hydraulic actuator.

### MEANS TO SOLVE THE PROBLEMS

In order to achieve the above-mentioned objects, there is provided according to the present invention an injection molding machine as set forth in claim 1. Preferred embodiments of the present invention may be gathered from the dependent claims.

### EFFECT OF THE INVENTION

According to the above-mentioned invention, in the injection molding machine, the hydraulic pump unit and the hydraulic actuator are provided in the movable part so as to be movable together with the movable part. Accordingly, the hydraulic piping does not form an obstacle during a maintenance work. Additionally, there is no need to temporarily remove the hydraulic piping, which permits to perform a maintenance work efficiently.

Moreover, according to the above-mentioned invention, a nozzle touch pressure is controlled to be a desired pressure with high accuracy and is maintained with a simple structure in which the switch valve is provided to the first working-fluid passage, which supplies the working fluid to the hydraulic actuator so as to control opening and closing of the switch valve. Additionally, since the hydraulic actuator is used, a part which is worn such as a ball screw is not needed, and a moving mechanism having a long service life can be realized.

Moreover, according to the above-mentioned invention, a nozzle touch pressure is controlled to be a desired pressure with high accuracy and is maintained by a simple structure in which an operation of the hydraulic actuator is controlled using the hydraulic pump unit of which fluid-pressure is adjustable. Additionally, since the hydraulic actuator is used, a part which is worn such as a ball screw is not needed, and a moving mechanism having a long service life can be realized.

### BRIEF DESCRIPTION OF THE DRAWINGS

FIG. 1 is an entire structure diagram of an injection molding machine.
FIG. 2 is a side view showing an outline of an injection apparatus.
FIG. 3A is a plan view of the injection apparatus viewed from above, showing a state where the injection apparatus is moved rearward.
FIG. 3B is a plan view of the injection apparatus viewed from above, showing a state where the injection apparatus is turned.
FIG. 4 is a cross-sectional view of a hydraulic pressure pump unit.
FIG. 5 is a side view of a clamping apparatus containing an ejector apparatus.
FIG. 6 is a cross-sectional view showing a variation of the ejector apparatus.
FIG. 7 is a side view showing an outline of the ejector apparatus which moves a screw forward and rearward by using a rotational motor and a ball screw mechanism.
FIG. 8 is a view showing an entire structure of a first embodiment of a plasticizer moving apparatus.
FIG. 9 is a view showing an entire structure of a second embodiment of a plasticizer moving apparatus.
FIG. 10 is a flowchart of "a nozzle touch pressure removal molding process" performed in an electric injection molding machine in which the first or second embodiment of the plasticizer moving apparatus is incorporated.
FIG. 11 is a flowchart of "a nozzle touch pressure touch back molding process" performed in an electric injection molding machine in which the first or second embodiment of the plasticizer moving apparatus is incorporated.
FIG. 12 is a view showing an entire structure of a third embodiment of a plasticizer moving apparatus.
FIG. 13 is a view showing an entire structure of a fourth embodiment of a plasticizer moving apparatus.
FIG. 14 is a view showing an entire structure of a fifth embodiment of a plasticizer moving apparatus.
FIG. 15 is a flowchart of "a nozzle touch pressure removal molding process" performed in the electric injection molding machine in which the third or fourth embodiment of the plasticizer moving apparatus is incorporated.
FIG. 16 is a flowchart of "a nozzle touch pressure touch back molding process" performed in the electric injection molding machine in which the third or fourth embodiment of the plasticizer moving apparatus is incorporated.
FIG. 17 is a flowchart of "a nozzle touch pressure removal molding process" performed in an electric injection molding machine in which the fifth embodiment of the plasticizer moving apparatus is incorporated.
FIG. 18 is a flowchart of "a nozzle touch pressure touch back molding process" performed in the electric injection molding machine in which the fifth embodiment of the plasticizer moving apparatus is incorporated.

### BEST MODE FOR CARRYING OUT THE INVENTION

Next, a description will be given, with reference to the drawings, of modes for carrying out the present invention.

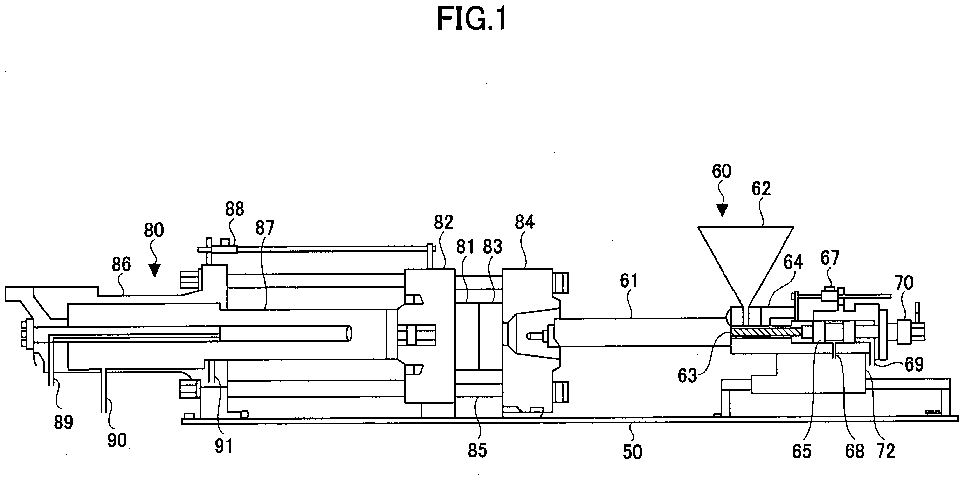

First, a description will be given, with reference to FIG. 1, of an injection molding machine as an apparatus to which the present invention is applicable. FIG. 1 is an entire structure view of the injection molding machine.

The injection molding machine shown in FIG. 1 comprises a molding machine frame 50, an injection apparatus 60 and a mold clamping apparatus 80 that is arranged opposite to the injection apparatus 60. The injection apparatus 60 and the mold clamping apparatus 80 are arranged on the molding machine frame 50. A mold apparatus comprised of a movable mold 81 and a stationary mold 83 is attached to the mold clamping apparatus 80.

The injection apparatus 60 is equipped with a heating cylinder 61, and a raw-material hopper 62 for supplying a raw-material resin such as resin pellets into the heating cylinder 61, is attached to the heating cylinder 61. A screw 63 is provided inside the heating cylinder 61 rotatably and movably forward and rearward.

An injection cylinder apparatus 64 as a hydraulic cylinder apparatus serving as an actuator is attached behind the screw 63 (right side in the figure). An injection piston 65 is provided linearly movable in the injection cylinder apparatus 64. The injection piston 65 is moved forward and rearward within the injection cylinder apparatus 64 by a working oil as a working fluid supplied into the injection cylinder apparatus 64 through a hydraulic line 68 and a hydraulic line 69 as a pressurized fluid line through which a pressurized fluid flows.

The injection piston 65 is connected with one end of a connection rod 66 of which the other end is connected to the screw 63. Thus, the screw 63 is moved forward and rearward within the heating cylinder 61 by the injection piston 65 being moved forward and rearward in the injection cylinder apparatus 64. It should be noted that a position detector 67 is connected to the injection piston 65 so that a position of the screw 63 is detected by the position detector 67.

Moreover, a screw drive motor 70 as a drive source for rotating the screw 63 is arranged behind the injection piston 65. The screw drive motor 70 is arranged on the same axis as the screw 63, the injection cylinder apparatus 64 and the injection piston 65.

Next, a description will be given of an operation of the injection apparatus 60.

First, in a metering process, the screw drive motor 70 is driven so as to rotate the screw 63 and move the screw 63 rearward (move to the right side in the figure) to a predetermined position. At this time, the raw-material resin supplied from the raw-material hopper 62 is heated and melted in the heating cylinder 61 and is stored in front of the screw 63 in association with the rearward movement of the screw 63.

Then, in an injection process, the entire injection apparatus 60 is moved forward so as to press a nozzle at an end of the heating cylinder 61 onto the stationary mold 83, and the injection piston 65 is moved forward (move to the left side in the figure) by supplying a pressurized oil into the injection cylinder apparatus 64 through a pressurized oil line 69. Thereby, the resin stored in front of the screw 63 is injected from the nozzle since the screw 63 is moved forward, and is filled in a cavity formed between the stationary mold 83 and the movable mold 82.

As mentioned above, the injection apparatus 60 is movable forward and rearward with respect to the stationary mold 83, and an electric actuator or a hydraulic actuator is used as a drive source for this movement. In the present embodiment, the injection apparatus 60 is driven using a hydraulic cylinder as a hydraulic actuator as mentioned later. It should be noted that the injection apparatus 60 is configured to be rotatable so that heating cylinder 61 is oriented in a direction off the mold clamping apparatus 80 in order to facilitate a maintenance work.

Next, a description will be given of the mold-clamping apparatus 80.

The mold-clamping apparatus 80 comprises a movable platen 82 as a movable mold supporting apparatus, a stationary platen 84 as a stationary mold supporting apparatus 84 and a mold-clamping cylinder apparatus 86. Then, the stationary platen 84 and the mold-clamping cylinder apparatus 86 as an actuator are coupled by, for example, four tie bars 85. The movable platen 82 is provided so as to be movable forward and rearward along said tie bars 85. It should be noted that the stationary platen 84 and the mold-clamping cylinder apparatus 86 are fixed to a frame by a fixing member such as a bolt. Additionally, a movable mold 81 and a stationary mold 83 are attached to the movable platen 82 and the stationary platen 84, respectively, so as to face each other.

And, a mold-clamping piston 87, which is movable linearly, is provided in the mold-clamping cylinder apparatus 86. The mold-clamping piston 87 is moved forward and rearward within the mold-clamping cylinder apparatus 86 by a working oil as a working fluid supplied into the mold-clamping cylinder apparatus 86 though a pressurized oil line 90 and a pressurized oil line 91 as a line through which the working fluid flows. Then, the movable platen 82 is connected to a front end (right end in the figure) of the mold-clamping piston 87. Thus, the movable platen 82 is moved forward or rearward by the mold-clamping piston 87 being moved forward or rearward in the mold-clamping cylinder apparatus 86.

Thereby, the movable mold 81 moves to the stationary mold 83, and mold-closing, mold-clamping and mold-opening are performed. That is, if the mold-clamping piston 87 is moved forward (move to the right side in the figure), the movable platen 82 and the movable mold 81 are moved forward, and the mold-closing and the mold-clamping are performed. On the other hand, if the mold-clamping piston 87 is moved rearward (move to the left side in the figure), the movable platen 82 and the movable mold 81 are moved rearward, and the mold-opening is performed.

It should be noted that a position detector 88 is connected to the movable platen 82. Positions of the movable platen 82 and the movable mold 81 are detected by the position detector 88. Additionally, a pressurized oil line 89 as a line through which a working fluid supplied to the ejector apparatus flows is formed inside the mold-clamping piston 87. Although the ejector apparatus is omitted in FIG. 1, it is provided to a back surface (left side face in the figure) of the movable platen 82.

In the injection molding machine of the above-mentioned structure, the injection apparatus 60 is a movable part which moves on the molding-machine frame 50, and is provided with a drive part for movement. When a hydraulic cylinder is used and a hydraulic pump is arranged inside the molding-machine frame 50, a piping is provided from the molding-machine frame 50, which is a stationary part, to the movable part, and there may occur the above-mentioned problem caused by a pipe or a flexible hose.

Moreover, the movable platen 82 is also a movable part which moves on the molding-machine frame, and the ejector apparatus attached to the movable platen 82 is provided on the movable part. The ejector apparatus includes a drive part for protruding ejector rods, and when using a hydraulic cylinder as an actuator for that, there may occur a problem the same as the above-mentioned problem.

Thus, in the present embodiment, a hydraulic drive apparatus (fluid-pressure drive apparatus), which is constituted individually as a hydraulic pump unit, is attached to the movable part such as the injection apparatus 60 and the mold-clamping cylinder apparatus 86 so that the hydraulic pump unit is configured to move or rotate together with the movable part. The hydraulic pump unit is a unit in which an electric motor, a hydraulic pump, a connection part connecting these and an oil tank are integrated, and is capable of suctioning and discharging the working oil, which is a pressurized fluid, by supplying an electric power. As mentioned above, by attaching the hydraulic pump unit to the injection apparatus or the mold-clamping apparatus, which is a movable part, so as to configure to be movable together, there is no need to use a flexible hose as a hydraulic pipe for supplying a hydraulic pressure to the movable part. Accordingly, there is no problem that a flexible hose forms an obstacle when performing a maintenance work, and the maintenance work can be performed easily. It should be noted that the structure of the hydraulic pump is described later.

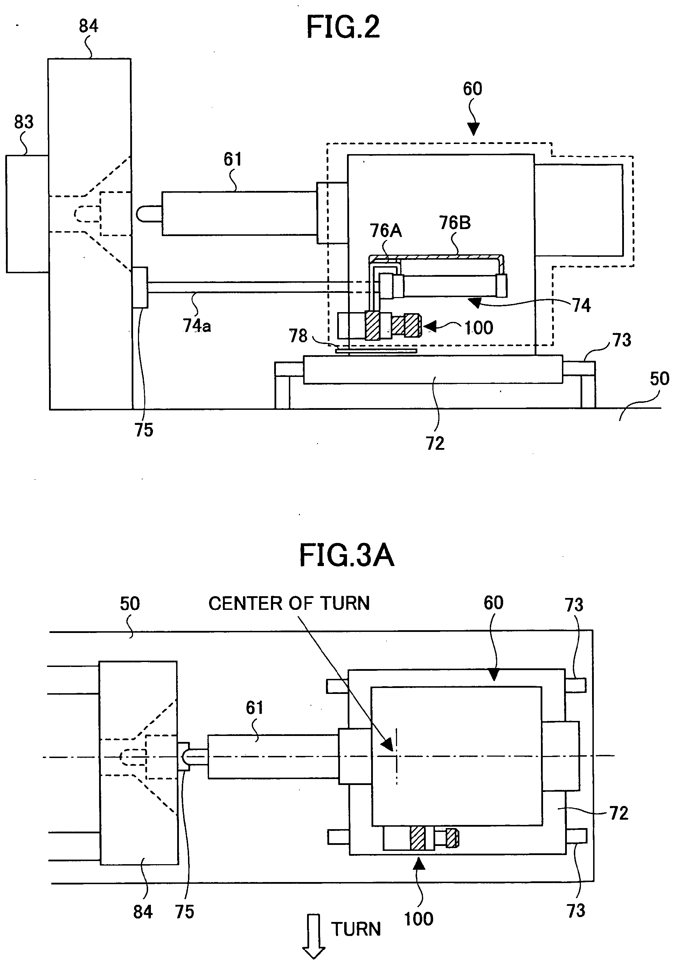

Next, a description will be give, with reference to FIG. 2, of a moving mechanism for moving the injection apparatus 60 on the molding-machine frame 50. FIG. 2 is a side view showing an outline of the injection apparatus 60.

The core component parts of the injection apparatus 60 are arranged on an injection-apparatus base 72 movable with respect to the molding-machine frame 50. A hydraulic cylinder (fluid-pressure cylinder) 74 as an actuator for moving forward and rearward is fixed to the main body of the injection apparatus 60. The hydraulic cylinder 74 functions as a hydraulic actuator. An end of a cylinder rod 74a of the hydraulic cylinder 74 is fixed to the stationary platen 84 fixed to the molding-machine frame 50 through a coupling block 75 attached to an end of the cylinder rod 74a. The injection apparatus 60 is installed on the injection apparatus base 72 by a fastening means such as a bolt or the like. The injection apparatus base 72 is movably attached forward and rearward along a guide rod 73 fixed to the molding-machine frame. Accordingly, by supplying a hydraulic pressure (pressurized working oil) to a front side or a rear side of the hydraulic cylinder 74, the entire injection apparatus 60 including the hydraulic cylinder 74 can be moved forward and rearward with respect to the stationary platen 84.

In the present embodiment, the above-mentioned hydraulic drive apparatus (fluid-pressure drive apparatus) 100 is provided near the hydraulic cylinder 74 on the injection apparatus base 72, and a fixed piping such as, for example, a copper pipe is provided so as to supply the working oil (working fluid) to the hydraulic cylinder (fluid-pressure cylinder) 74. In order to move the injection apparatus 60 forward and rearward, the hydraulic drive apparatus 100 is reversible and is configured so that discharge and suction can be switched.

That is, when moving the injection apparatus 60 forward to the stationary platen 84, the working oil is supplied to the front side of the hydraulic cylinder 74, and when moving the injection apparatus 60 rearward to the stationary platen 84, the working oil is supplied to the rear side of the hydraulic cylinder 74. Accordingly, one discharge and suction port of the hydraulic drive apparatus 100 and the front side of the hydraulic cylinder 74 are connected by a fixed pipe 76A, and another discharge and suction port of the hydraulic drive apparatus 100 and the rear side of the hydraulic cylinder 74 are connected by a fixed pipe 76B.

As mentioned above, the hydraulic drive apparatus 100 is arranged near the hydraulic cylinder 74, and the fixed pipes 76A and 76B are made as short as possible, a pressure loss in the hydraulic pipe can be minimized. Accordingly, a hydraulic pressure supplying capability required for the hydraulic drive apparatus 100 can be reduced, and can be miniaturized. Additionally, there is no need to always use a flexible pipe which is easily broken, and a hydraulic pressure can be supplied only by a fixed pipe, which can improve reliability of piping. Further, since the fixed pipe is made as short as possible and provided in a part where it does not form an obstacle for a maintenance work, there is no need to remove the fixed pipe when performing the maintenance work, which allows the maintenance work being performed in a short time.

It should be noted that an oil pan 78 is provided under the hydraulic drive apparatus 100 so that the working oil does not flow to other parts of the molding machine when the working oil leaks from the hydraulic drive apparatus 100. Additionally, the main body of the injection apparatus 60 is covered by an injection cover as indicated by dotted lines in the figure, and the hydraulic cylinder 74 and the hydraulic drive apparatus 100 are also covered by the injection cover. Here, the oil pan 78 is provided to the injection apparatus main body 60 as well as the hydraulic pump unit 100, but is attached above the injection apparatus base 72 as an under cover so that it can be attached and detached even in a state where the injection cover is attached.

As mentioned above, by configuring the hydraulic drive apparatus 100 to move together with the injection apparatus 60, which is a movable part, there is no need to always use a flexible hose as a hydraulic pipe, which permits a maintenance work being performed easily. Additionally, since the hydraulic drive apparatus 100 can be provided close to the hydraulic cylinder 74, the hydraulic pipe can be shortened and a pressure loss due to the hydraulic pipe can be reduced. Thereby, an influence of the pressure loss given to the hydraulic pump can be reduced, which permits a use of a small hydraulic pump. Further, the hydraulic pipe can also be constituted by only a fixed pipe, and if it is configured to not use a flexible hose, which is easily damaged, reliability of the hydraulic pipe can be improved.

Even if a flexible hose is used, since the flexible hose moves with the movable part, it can be provided in the cover of the movable part, which can improve reliability of the hydraulic pipe.

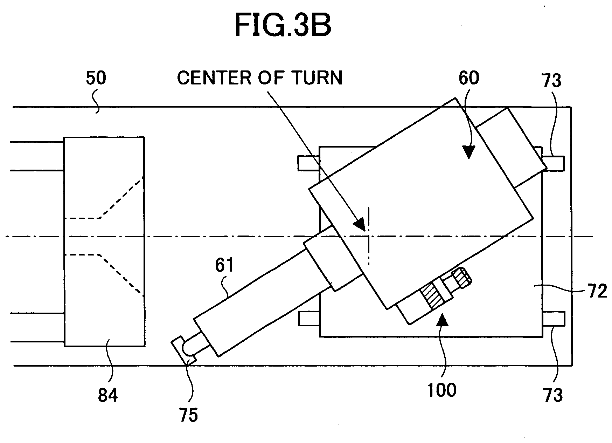

Here, the injection apparatus 60 is configured to be turnable relative to the injection apparatus base 72 besides being configured to be movable forward and rearward with respect to the stationary platen 84 as mentioned above. FIG. 3A is a plan view of the injection apparatus 60 viewed from above, and shows a state where the injection apparatus 60 is moved rearward. FIG. 3B is a plan view of the injection apparatus 60 viewed from above, and shows a state where the injection apparatus 60 is turned. The reason for turning the injection apparatus 60 is for shifting from a longitudinal direction axis of the molding machine so as to take out the heating cylinder 61, which has the screw 63, from the nozzle side at the end thereof and perform a maintenance work.

Since the hydraulic drive apparatus 100, the hydraulic cylinder 74 and the fixed pipes 76A and 76B turn together with the injection apparatus 60 when turning the injection apparatus 60, there is no need to remove the fixed pipes 76A and 76B when performing a maintenance work. Accordingly, working hours of maintenance can be reduced.

Furthermore, the hydraulic cylinder 74 and the cylinder rod 74a may be arranged at two locations on a diagonal line with respect to the heating cylinder 61. In this case, if a nozzle touch is made with a single cylinder 74a, an inclination occurs in the stationary platen by a nozzle pressing pressure and a bad influence may be give to molding, but, by making a nozzle touch using a plurality of cylinder rods arranged symmetric with respect the heating cylinder 61, an inclination of the stationary platen can be reduced.

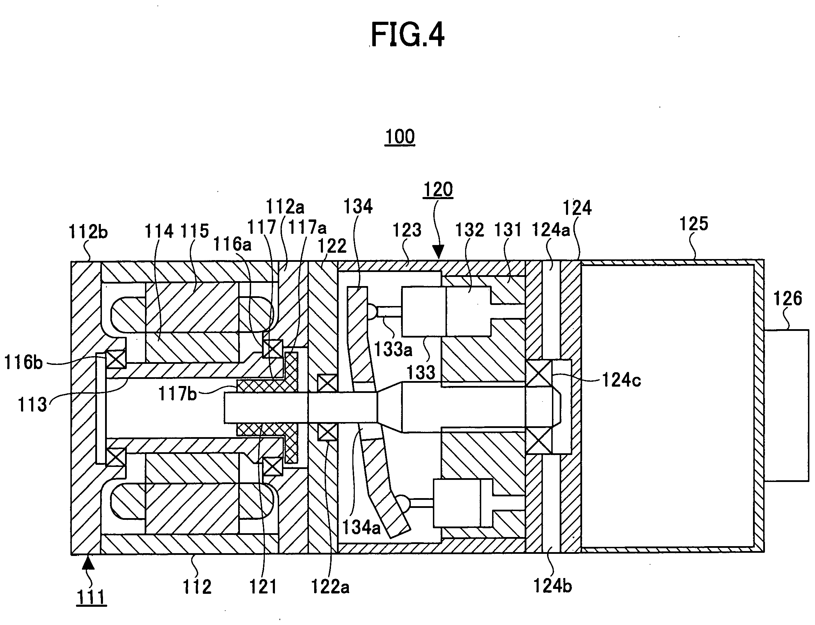

Next, a detailed description will be given, with reference to FIG. 4, of the structure of the hydraulic drive apparatus 100 which is a fluid-pressure drive apparatus according to the present embodiment. FIG. 4 is a cross-sectional view of the hydraulic drive apparatus 100 in the embodiment of the present invention.

In FIG. 4, the hydraulic drive apparatus 100 comprises a motor 111, which is a drive source, as a bidirectionally rotatable motor and a fluid-pressure (hydraulic) pump 20, which is a member to be driven, as a bidirectionally rotatable pump. Here, the motor 111 is a variable speed motor such as a servomotor, and has a housing 112 and a hollow shaft 113 as a rotation shaft, the hollow shaft 113 being rotatably attached to a front end wall 112a and a rear end wall 112b of the housing 112 via a bearing 116a and a bearing 116b as a bearing. Additionally, a rotor 114 is attached to an outer circumference of the hollow shaft 112, and a stator 115 is attached to an inner wall of the housing 112. Thus, when the motor 111 is operated, the rotor 114 attached to the hollow shaft 113 is rotated with respect to the stator 115 attached to the housing 112 by an electromagnetic force, thereby rotating the hollow shaft 113.

Moreover, a fluid-pressure pump 120 equipped with a variable speed means is attached to the front end wall 112a of the motor 111. That is, the motor 111 and the fluid-pressure pump 120 are combined. The fluid-pressure pump 120 has an attachment plate 122, a housing 123 and a valve plate 124, and the attachment plate 122 is attached to the front end wall 112a of the motor 111. Additionally, the fluid-pressure pump 120 has a rotatable operation shaft 121 rotatably attached to the attachment plate 122 and the valve plate 124 via a bearing 122a and a bearing 124c as a baring. It is so configured that a rotation of the hollow shaft 113 of the motor 111 is transmitted to the operation shaft 121.

Then, a spline is formed on an outer surface near the front end (right end in the figure) of the operation shaft 121 so that a piston casing (cylinder block) 131 having a fitting hole formed with a male spline is attached by spline coupling.

Moreover, an incline plate 134 is provided in the housing 123 in an inclined state. Although the incline plate 134 is configured to be not rotatable, an inclination angle can be adjusted. It should be noted that the operation shaft 121 is inserted into an insertion hole 134a formed in the incline plate 134. The inner diameter of the insertion hole 134a is sufficiently larger than the outer diameter of the operation shaft 21. Then, it is so configured that a root end part of a piston rod 133a attached to the piston 133 moves on a front surface (right side surface in FIG. 4) of the incline plate 134 while sliding.

Attached to the valve plate 124 is an oil tank 25 as a pressurized-fluid storage container for storing a pressurized-fluid such as a working oil. An air breather 126 for maintaining a pressure in the oil tank 125 at a constant pressure is attached to the end of the oil tank 125. A suction flow passage 124a formed in the valve plate 124 returns the working oil from an actuator (not shown in the figure) to the fluid-pressure pump 120 of the hydraulic drive unit 110.

Since a bearing 116a is attached to the outer circumference of the hollow shaft 113 near the front end, a spline engagement part mentioned later is positioned on an inner side in a circumferential direction of the bearing 116a. Accordingly, a distance between the spline engagement part and the bearing 116a is short. Thus, even if an eccentric load is generated in the operation shaft 121, a moment applied to the bearing 116a can be made small.

Moreover, the operation shaft 121 of the fluid-pressure pump 120 protruding rearward (leftward in the figure) from the fluid-pressure pump 120 is inserted into a female spline hollow shaft 117. Here, the spline which extends in an axial direction is formed on the outer circumference of the operation shaft 121. The spline of the operation shaft 121 engages with the spline formed on the inner surface of the cylinder part 117b of the female spline hollow shaft 117. That is, the operation shaft 121 and the female spline hollow shaft 117 constitute the spline engagement part as an engagement part by the splines thereof being engaged with each other. Thus, the operation shaft 121 and the female spline hollow shaft 117 are movable to each other in the axial direction so that a structure in which removal of the motor 111 and the fluid-pressure pump 120 is easy can be realized. Additionally, the operation shaft 121 and the female spline hollow shaft 117 are in a state where they are restraint with each other in a rotational direction and a rotation of the female spline hollow shaft 117 is transmitted to the operation shaft 120, and, thus, when the motor 111 is operated, the fluid-pressure pump 120 is driven. Thereby, when the motor 111 is operated and the hollow shaft 113 is rotated, the operation shaft 121 is rotated and the fluid-pressure pump 120 is operated, which results in a discharge of a pressurized fluid such as a working oil.

Since the hollow shaft 113 of the motor 111 and the operation shaft 121 of the fluid-pressure pump 120 are connected by the connection structure of the operation shaft 121 and the female spline hollow shaft 117 as mentioned above, connection and disconnection between the motor 111 and the fluid-pressure pump 120 can be performed easily. That is, disassembly and assembly of the hydraulic drive apparatus 100 can be performed easily in a short time. Further, since the connection is made in a state where the operation shaft 121 of the fluid-pressure pump 120 is inserted into the hollow shaft 113 of the motor 111, a distance between the rear end of the motor 111 and the front end of the fluid-pressure pump 20 can be reduced, and an entire length of the hydraulic drive apparatus 100 is shortened and the hydraulic drive apparatus 100 can be miniaturized.

Moreover, the female spline hollow shaft 117 can be selected in any length, shape and size in accordance with a change of the drive force transmitted from the motor 111 to the fluid-pressure pump 120. Thereby, for the hydraulic drive apparatus 100, an arbitrary kind of the motor 111 and an arbitrary kind of the fluid-pressure pump 120 can be combined if necessary. Additionally, since connection and disconnection between the motor 111 and the fluid-pressure pump 120 can be performed easily, even if the female spline hollow shaft 117 is broken, it can be replaced by a new female spline hollow shaft 117 easily.

Here, although the explanation was given for the case where the rotation shaft of the motor 11 is the hollow shaft 113 and the operation shaft 121 of the liquid-pressure pump 120 is inserted into the interior of the hollow shaft 113, the operation shaft 121 of the liquid-pressure pump 120 may be hollow and the rotation shaft of the motor 111 may be inserted into the interior of the hollow operation shaft 121. In this case, by attaching a member having the same construction as the female spline hollow shaft 117 to the operation shaft 121, a connection structure the same as the above-mentioned connection structure can be realized. That is, what is required in the present embodiment is that at least a part of the spline engagement part overlaps with one of the motor 111 and the fluid-pressure pump 120.

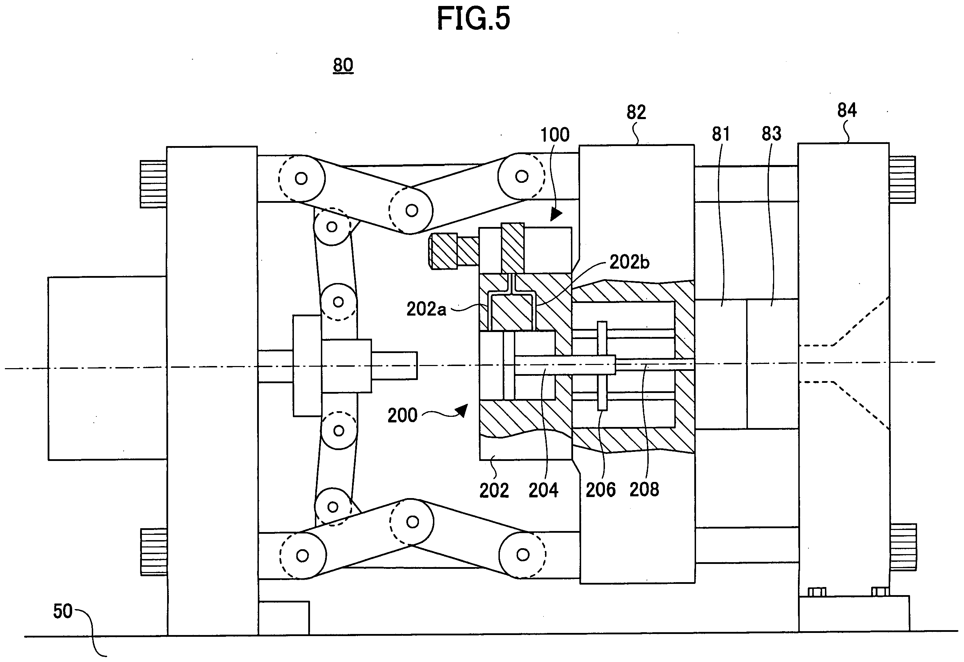

Next, a description will be give, with reference to FIG. 5, of an ejector apparatus 200 provided to the movable platen 82 of the mold-clamping apparatus 80. FIG. 5 is a side view of the mold-clamping apparatus 80 containing the ejector apparatus 200. It should be noted that the moving mechanism of the movable platen 82 of the mold-clamping apparatus 80 shown in FIG. 5 is a mechanism using a bidirectionally rotatable motor, a ball screw for converting a rotational motion to a linear motion and a toggle mechanism, and is different from the moving mechanism using the hydraulic actuator of the mold-clamping apparatus 80 shown in FIG. 1. The ejector apparatus 200 according to the present embodiment is applicable to the mold-clamping apparatus of any type.

The ejector apparatus 200 is attached to a rear surface of the movable platen 82, and comprised of a cylinder part 202 functioning as a hydraulic cylinder and a cylinder rod 204. An end of the cylinder rod 204 protrudes into an inner space of the movable platen 82, and is connected to a retainer plate 206 in the inner space. The retainer plate 206 guides the cylinder rod 204 so that the cylinder rod 204 moves in an axial direction. The cylinder rod 204 is connected to an ejector rod 208 so as to move the ejector rod 208, which is a movable part, in the axial direction.

The cylinder part 202 has the same structure as a hydraulic cylinder so that the cylinder rod 204 is moved forward with respect to the movable mold 81 by supplying the working oil to the rear side of the cylinder 202 through a hydraulic passage 202a. Additionally, by supplying the working oil to the front side through a hydraulic passage 202b, the cylinder rod 204 can be moved rearward so as to be apart from the movable mold 81. Accordingly, by moving the cylinder rod 204 forward and rearward, the ejector rod 206 is moved forward and rearward so that a molded product can be ejected from the movable mold 81.

In the present embodiment, the hydraulic drive apparatus 100 is attached to the cylinder part 202 so as to supply the working oil to the cylinder part 202. The hydraulic passages 202a and 202b of the cylinder part 202 are connected directly to the suction and discharge ports of the hydraulic drive apparatus 100, and there is no need to provide piping. Accordingly, since there is no need to connect a hydraulic pump to the cylinder part 202 by a fixed pipe or a flexible hose, a pressure loss due to a hydraulic pipe dose not occur, and the cylinder rod 206 can be moved sufficiently by the hydraulic drive apparatus 100 having a small hydraulic pump.

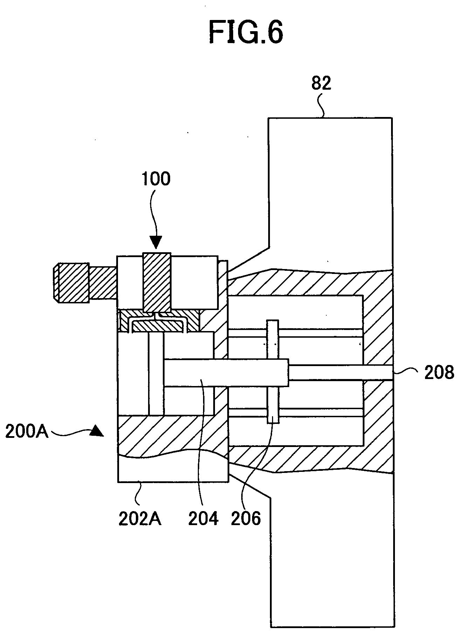

FIG. 6 is a cross-sectional view showing a variation of the ejector apparatus 200. In the ejector apparatus 200A shown in FIG. 6, a notch is provided in a portion of the cylinder part 202A and connection part 210 is fixed. The hydraulic passages 210a and 210b are formed inside the connection part 210, and the hydraulic drive apparatus 100 is attached to the connection part 210. A thickness of the connection part 210 can be a thickness which merely withstand a hydraulic pressure supplied to the cylinder part 202, and the hydraulic passages 210a and 210b inside can be shortened and a pressure loss can be reduced further more.

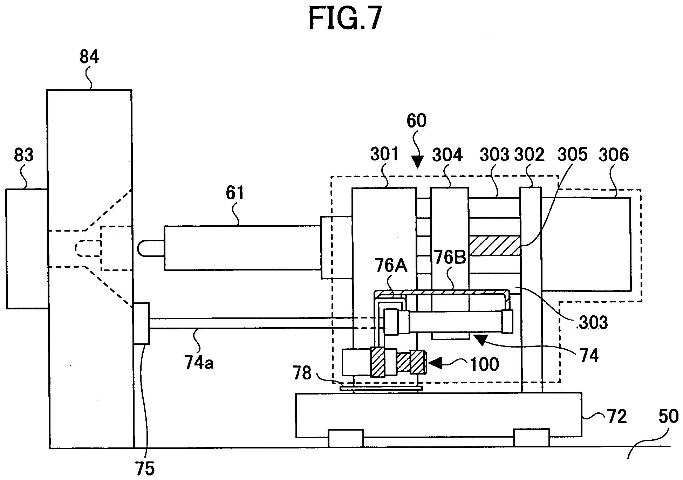

Additionally, a description will now be give, with reference to FIG. 7, of a case where the hydraulic drive apparatus (fluid-pressure drive apparatus) according to the present invention is applied to an injection apparatus, which moves a screw forward and rearward by using a rotation type motor and a ball screw mechanism which converts a rotational motion to a linear motion. In the injection apparatus in this case, a front part flange 301 and a rear part flange 302 are coupled by a guide rod 303, and a pressure plate 304 is attached so as to be movable forward and rearward along a guide rod 303. A ball screw 305 is arranged between the pressure plate 304 and the rear part flange 302. Thereby, a rotational motion generated by a motor 306 is converted into a linear motion by the ball screw mechanism, and the pressure plate 304 is moved forward and rearward, which can move the screw forward and rearward.

In this injection apparatus, the fluid-pressure drive apparatus 100 and the hydraulic cylinder 74 are provided to the front part flange 301, and the hydraulic drive apparatus 100 and the hydraulic cylinder 74 can be turned simultaneously with a turn of the injection apparatus 60 as is the same as the above-mentioned embodiment. Additionally, the hydraulic cylinder 74 may be attached to the front part flange 301 and the hydraulic drive apparatus 100 may be attached to the rear flange 302. In this case, since a fixed pipe can be arranged in the entire injection apparatus 60 and wiring for the motor drive and lubricant hose for lubricating the ball screw can be traced along the fixed pipe, the wiring and the hose are not broken due to a vibration, which results in a stable operation of the injection molding machine.

Moreover, although it is shown as an application example of the hydraulic drive apparatus 100 according to the present invention, it can be applied to the injection cylinder apparatus 64 shown in the embodiment. In this case, the suction and discharge flow passages 124a and 124b of the hydraulic drive apparatus 100 for injection drive can be provided at a position on an upper side or near a side surface of the injection cylinder 64. When performing a maintenance work of the screw 63, the hydraulic drive apparatus 100 can be turned together with the injection cylinder apparatus 64. It is effective in a small apparatus of which clamping force is equal to or smaller than 100 tons.

Furthermore, the hydraulic drive apparatus (fluid-pressure drive apparatus) according to the present invention may be applied to a mold-clamping apparatus. In this case, it can be situated directly on the mold-clamping cylinder apparatus 86. Additionally, in a case of the mold-clamping apparatus, unlike the injection apparatus, there is no need to move the entire apparatus largely, it can be provided on the frame. Especially, it is effective to a small injection molding machine of which mold-clamping force is equal to or smaller than 100 tons.

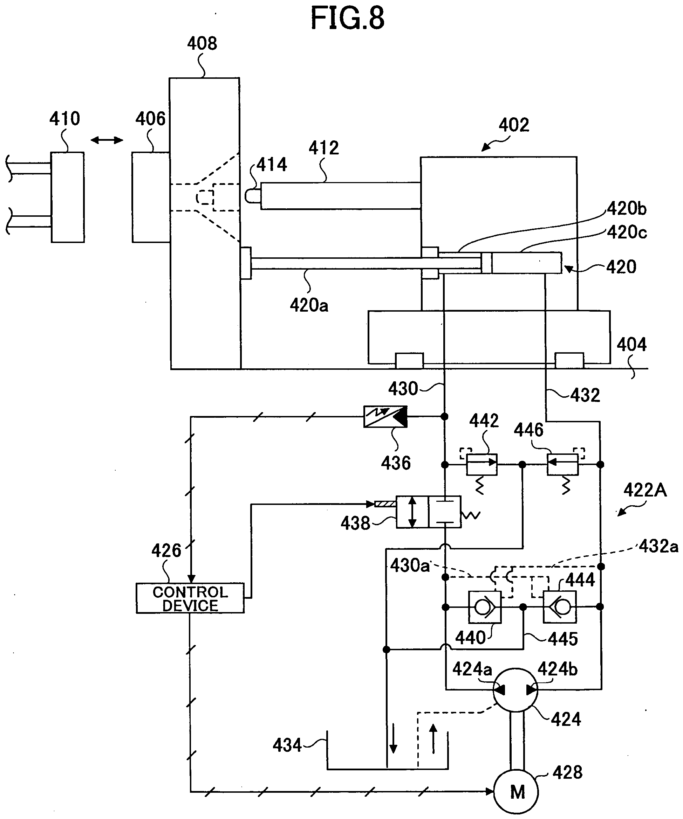

Next, a description will be given, with reference to FIG. 8, of a plasticizer moving apparatus used in an injection molding machine according to the present invention. FIG. 8 is a view showing an entire structure of a first embodiment of a plasticizer moving apparatus according to the present invention.

The plasticizer moving apparatus shown in FIG. 8 is provided for moving an injection apparatus 402 provided to an electric injection molding machine. The injection apparatus 402 is supported movable to a stationary platen 408 which supports a stationary mold 406 on a chassis 404 of the molding machine. The movable mold 410 is provided movable to the stationary mold 406. A resin filling process and pressure holding process are performed in a state where the mold is closed by pressing the movable mold 410 onto the stationary mold 406. Additionally, a taking-out process of a molded product and a resin metering process are performed in a state where the mold is open by separating the movable mold 410 from the stationary mold 406.

The injection apparatus 402 has a screw 412 for metering and extruding the melted resin, and a nozzle 414 is provided on an extreme end of the screw 412. The melted resin is discharged from the extreme end of the nozzle 414. In the filling process for injecting and filling the melted resin into the mold, the injection apparatus 402 is moved toward the stationary platen 408 so as to press the nozzle 414 onto the stationary mold 410 or a injection part of the stationary platen 408 (nozzle touch).

The plasticizer moving apparatus according to the present embodiment is a moving mechanism for moving the above-mentioned injection apparatus 402, and comprises a hydraulic cylinder 420 as a fluid-pressure actuator, a hydraulic circuit 422A for supplying a working oil as a working medium or a working fluid to the hydraulic cylinder 420, a bidirectionally rotatable hydraulic pump 424 as a fluid-pressure source for generating a hydraulic pressure of the working oil (fluid-pressure of a corking medium), and a control device 426 for controlling the hydraulic pump 424. The hydraulic pump 424 is driven by an induction motor 428 as a reversible electric motor in the present embodiment.

The extreme end of the shaft 420a of the hydraulic cylinder 420 is fixed to the stationary platen 408, and the entire injection apparatus 402 moves toward the stationary platen 408 (that is, the mold) (this direction is referred to as forward) by supplying the working oil pressurized by the hydraulic pump 424 to the rear side of the hydraulic cylinder 420 through a passage 430 (first working-fluid passage) as a hydraulic pipe. On the other hand, the entire injection apparatus 402 moves in a direction apart from the stationary platen 408 (that is, the mold) (this direction is referred to as rearward) by supplying the working oil pressurized by the hydraulic pump 424 to the front side of the hydraulic cylinder 420 through a passage 432 (second working-fluid passage).

The passage 430 is connected to one suction and discharge port 424a (first suction and discharge port) of the hydraulic pump 424, and the passage 432 is connected to the other suction and discharge port 424b (second suction and discharge port) of the hydraulic pump 424. By switching the rotation direction of the induction motor 428, the pump 424 can suction the working oil from one of the suction and discharge ports 424a and 424b and discharge the working oil from the other so as to generate a hydraulic pressure. The induction motor 428 is controlled by the control device 426, and the rotation direction is switched by the control device 426. It should be noted that the hydraulic pump 424 may also suction the working oil from the tank 434 and discharge the working oil from one of the discharge ports 424a and 424b.

Moreover, the passage 430 is connected to a front side oil chamber 420b of the hydraulic cylinder 420, and the passage 432 is connected to a rear side oil chamber 420c of the hydraulic cylinder 420. Here, since a shaft 420a penetrates through inside the front side oil chamber 420b, the cross-sectional area of the front side oil chamber 420b is smaller than the cross-sectional area of the rear side oil chamber 20c. However, by setting the side to which the working oil is supplied to the front side when generating a nozzle touch pressure, the hydraulic cylinder 420 can be arranged on the injection apparatus 402 and the molding machine can be compact.

In a middle of the passage 430 which supplies the working oil to the front side of the hydraulic cylinder 420, a pressure sensor 436 and a block type switch valve 438 are provided. The block type switch valve 438 is a switch valve which opens and closes the passage 430 of the working oil based on a signal from the control device 426. That is, the working oil is supplied to the front side of the hydraulic cylinder 420 so as to move the injection apparatus 42 forward, and when a nozzle touch pressure is generated by making a nozzle touch, the switch valve 438 is open by control device 426 and the working oil is supplied from the suction and discharge port 424b of the hydraulic pump 424 to the hydraulic cylinder 420 by passing through the switch valve 438.

The pressure sensor 436 detects the oil pressure of the passage 430, and sends a detection signal to the control device 426. The pressure sensor 436 is provided in the passage 430 near the hydraulic cylinder 420, and the oil pressure detected by the pressure sensor 436 is nearly equal to an oil pressure in the hydraulic cylinder. Accordingly, the control device 426 can recognize the oil pressure in the hydraulic cylinder 420 by the detection signal from the pressure sensor 436. Since the nozzle touch pressure which moves the injection apparatus 402 forward to press the nozzle 414 is generated by the oil pressure in the hydraulic cylinder 420, the detection signal of the pressure sensor 436 is also a signal representing the nozzle touch pressure.

When the hydraulic pump 424 is operated and the switch valve 438 is opened and the hydraulic cylinder 420 is operated and the injection apparatus 402 is moved forward and the working oil is continuously supplied to the front side of the hydraulic cylinder 420 after a nozzle touch is made, the oil pressure in the hydraulic cylinder 420 goes up, and, thereby, the nozzle touch pressure goes up. The control device 426 controls the switch valve 438 to close at a time when the nozzle touch pressure is at a desired pressure, that is, the detection signal of the pressure sensor 436 is at a predetermined level. Thereby, the oil pressure is maintained on the front side of the hydraulic cylinder 420, and the nozzle touch pressure is also maintained at the desired pressure and also the operation of the induction motor 428 is stopped.

When reducing the nozzle touch pressure, the hydraulic pump 424 is reversed by reversing the induction motor 428 and the switch valve 438 is opened. Thereby, the working oil on the front side of the hydraulic cylinder 420 flows into the suction and discharge port 424a of the hydraulic pump 424 through the switch valve 438, and is discharged from the suction and discharge port 424b to the passage 432, and supplied to the rear side of the hydraulic cylinder 420. The nozzle touch pressure can be controlled by controlling the valve opening time of the switch valve 438. Additionally, also by controlling the opening and closing of the switch valve 438 in a state where the induction motor 428 is stopped, the nozzle touch pressure can be reduced to a desired pressure.

It should be noted that a safety valve 442 (first safety valve) which is a relief valve is connected to the passage 430 between the pressure sensor 436 and the switch valve 438 so as to release the oil pressure when the oil pressure on the front side of the hydraulic cylinder 420 rises excessively. When the hydraulic pressure 420 is operated by the working oil being supplied to the front side of the hydraulic cylinder 420, the working oil on the rear side of the hydraulic cylinder flows through the passage 432 and suctioned by the hydraulic pump 424 from the suction and discharge port 424b, and is discharged from the suction and discharge port 424a to the passage 430 and supplied to the front side of the hydraulic cylinder 420 through the switch valve 438.

When moving the injection apparatus 402 rearward, the rotation of the induction motor is reversed so as to discharge the working oil from the suction and discharge port 424b of the pump 424 and supply the working oil to the rear side of the hydraulic cylinder 420 through the passage 432. At this time, the switch valve 438 is opened, and the working oil on the front side of the hydraulic cylinder 420 is suctioned by the hydraulic pump 424 through the switch valve 438, and is supplied to the rear side of the hydraulic cylinder 420 through the passage 432. A safety valve 446 (second safety valve) which is a relief valve is connected to a middle of the passage 432 so as to release the oil pressure when the oil pressure on the rear side of the hydraulic cylinder 420, that is, the oil pressure in the passage 432 rises excessively.

In the above-mentioned hydraulic circuit 422A, since a number of valves is small, the system is simplified and becomes compact. Additionally, an influence of the noise due to a valve operation is small. Further, since the hydraulic piping is simplified in the hydraulic circuit 422A, there are a small number of parts where leakage of the working oil may occur, which provides excellent reliability.

Moreover, in the above-mentioned hydraulic circuit 422A, the high-pressure working oil on the front side or the rear side of the hydraulic cylinder 420 is once suctioned by the hydraulic pump 424 and is discharged by the hydraulic pump. At this time, only an excessive amount of the working oil is returned to the tank 434. Accordingly, the high-pressure working oil is never returned directly to the tank. If the high-pressure working oil is returned to the tank 434, it is possible that the oil surface in the tank 434 waves and air may enter the working oil. Especially when the tank 434 is made small, the possibility of mixture of air is high. However, according to the hydraulic circuit 422A in the present embodiment, since the working oil does not return directly to the tank 434, mixture of air due to that can be prevented.

Additionally, in the above-mentioned hydraulic circuit 422A, the working oil from the front side of the hydraulic cylinder 420 is returned to the rear side of the hydraulic cylinder 420 through the hydraulic pump 424. Here, in the case whether the working oil from the front side of the hydraulic cylinder 420 is returned to the tank 434 and thereafter suctioned and discharged by the hydraulic pump 424 so as to supply to the rear side of the hydraulic cylinder 420, it is necessary to suction and discharge the working oil after returning the working oil (the working oil on the front side of the hydraulic cylinder 420) corresponding to pressure release, and, thus, in order to start the rearward movement of the injection apparatus, it is necessary to wait for the return of the working oil to the tank. However, in the hydraulic circuit 422 according to the above-mentioned present embodiment, since the working oil is discharged immediately after returning to the hydraulic pump 424, the rearward moving operation can be started immediately, which reduces a cycle time of molding.

As mentioned above, in the present embodiment, the nozzle touch pressure is controlled and maintained at a desired pressure by the simple structure in which the block type switch valve is provided to the passage 438 and merely controlling the opening and closing of the block type switch valve 438 by the control device 426 based on the detection signal from the pressure sensor 436. Additionally, the nozzle touch pressure can be controlled accurately by the opening and closing of the block type switch valve 438.

Additionally, since the working oil on the front side and rear side of the hydraulic cylinder 420 is circulated through the hydraulic pump, the suction pressure of the hydraulic pump 424 is the pressure in the hydraulic cylinder, which is higher than an atmospheric pressure, and the compression ratio is reduced, and, thus, the hydraulic pump 424 can be operated efficiently. Or the induction motor can be miniaturized. Additionally, there is no need to pressurize again after the pressure of the working oil is returned to an atmospheric pressure (that is, after returning to the tank 434), and heat generation of the working oil is also suppressed, and, thus, degradation of the working oil can be suppressed.

Moreover, since there is no orifice, which may limit a flow of the working oil, provided to the hydraulic circuit 422A, a response in a pressure control of the hydraulic cylinder 420 is good, and, for example, a rearward moving operation of the injection apparatus 402 when performing setback molding as mentioned later can be performed rapidly. Further, heat generation of the working oil can be suppressed.

Additionally, since the opening and closing of the switch valve 438 and the switching of the rotating direction of the hydraulic pump 424 are performed based on the detection signal of the pressure sensor 436 so as to switch a flow of the working oil, the circuit structure is simple as compared to a hydraulic pressure control circuit which controls a pressure using a pressure switch or the like.

Further, since the hydraulic actuator (hydraulic cylinder 420) is used, there is no part which is worn such as a ball screw, and a moving mechanism having a long service life can be realized.

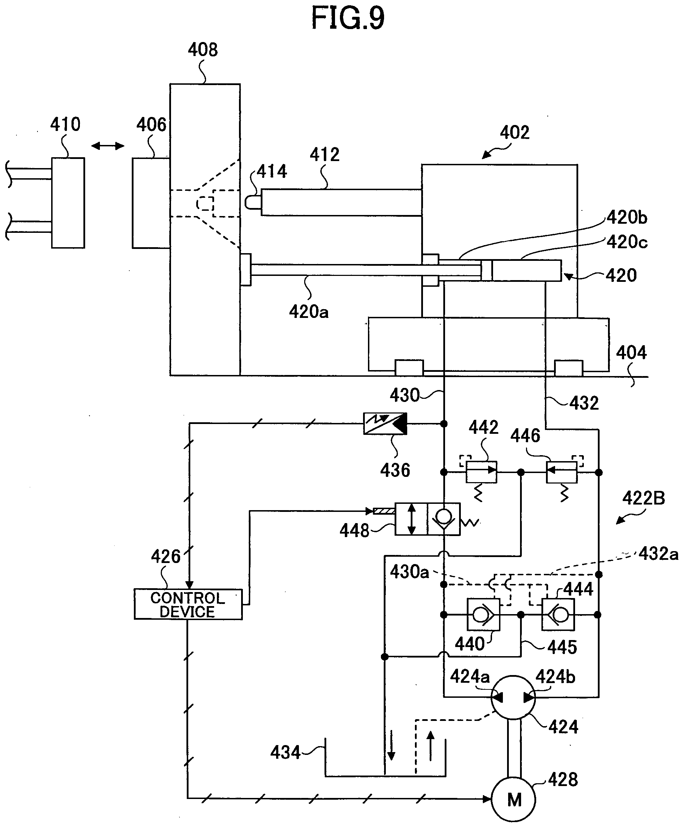

Next, a description will be given, with reference to FIG. 9, of a second embodiment of a plasticizer moving apparatus according to the present invention. FIG. 9 is a view showing an entire structure of the second embodiment of the plastcizer moving apparatus according to the present invention. It should be noted that in FIG. 9, parts that are the same as the parts shown in FIG. 8 are given the same reference numerals, and descriptions thereof will be omitted.

Although the plasticizer moving apparatus shown in FIG. 9 has basically the same structure as the plasticizer moving apparatus shown in FIG. 8, it differs in that the block type switch valve 438 in the hydraulic circuit 422A is replaced by a check valve type switch valve 448 in a hydraulic circuit 422B of the present embodiment. That is, in the plasticizer moving apparatus according to the present embodiment, the check valve type switch valve 448 is provided to the passage 430 for supplying the working oil to the front side of the hydraulic cylinder 420.

By using the check valve type switch valve 448, even if the working oil is continuously supplied from the suction and discharge port 424b of the hydraulic pump 424 while the switch valve 448 is kept closed due to some kind of malfunction or the switch valve 448 is kept closed due to a malfunction of the control device, the high-pressure working oil can be released to the tank 434 through the check valve type switch valve 448 and through the safety valve 442. That is, if it transpires that an excessively high-pressure is generated between the hydraulic pump 424 and the switch valve 448 due to some kind of malfunction, the excessive high-pressure can be released by using the check valve type switch valve 448, which improves safety.

It should be noted that check valves 440 and 444 are provided between the passage 430 and the passage 432 in the present embodiment, and a portion between the two check valves 440 and 444 is connected to the tank 434 by a drain passage 445. The check valves 440 and 444 and the drain passage 445 form a drain circuit for adjusting shortage and excess of an amount of circulation of the working oil due to a difference between volumes of the front side and the rear side of the hydraulic cylinder 420. For example, when the injection apparatus 402 is moved forward, the working oil is supplied to the front side oil chamber 420b from the pipe 430 and working oil is discharged from the rear side oil chamber 420c. In this case, since the cross-sectional area of the rear side oil chamber 420c is larger than the cross-sectional area of the front side oil chamber 420b, an amount of the working oil discharged from the rear side oil chamber 420c is larger than an amount of the working oil supplied to the front side oil chamber 420b. On the other hand, if the working oil is continuously supplied to the pipe 430 from the pump 424 so as to move the injection apparatus 402 forward, the pressure of the working oil in the pipe 430 becomes high, the working oil in the pipe 430 is transmitted to the pipe 430a and acts to open the check valve 444 of the pipe 432. Then, if the check valve 444 is opened, the working oil discharged from the rear side oil chamber 420c is returned to the tank 434 by passing through the check valve 444 and the drain passage 445. Accordingly, shortage and excess of the working oil in the pipe 430 and the pipe 432 can be adjusted.

In the above-mentioned second embodiment, by providing the switch valve 448 to the passage 430 and closing the switch valve 446 in a filling process and a pressure holding process, the pressure on the front side of the hydraulic cylinder 420 is maintained to maintain the nozzle touch pressure at a high-pressure. Accordingly, while the switch valve 446 is closed, the hydraulic pump 424 can be stopped without being driven. Thereby, a drive time of the hydraulic pump 424 can be reduced, and the consumed electric power of the induction motor 428 can be reduced. Additionally, when maintaining the nozzle touch pressure at a low-pressure, the switch vale 446 is closed and the drive of the hydraulic pump 424 can be stopped or an idling drive may be performed.

Next, a description will be given of a molding process performed by the injection molding machine using the above-mentioned plasticizer moving apparatus.

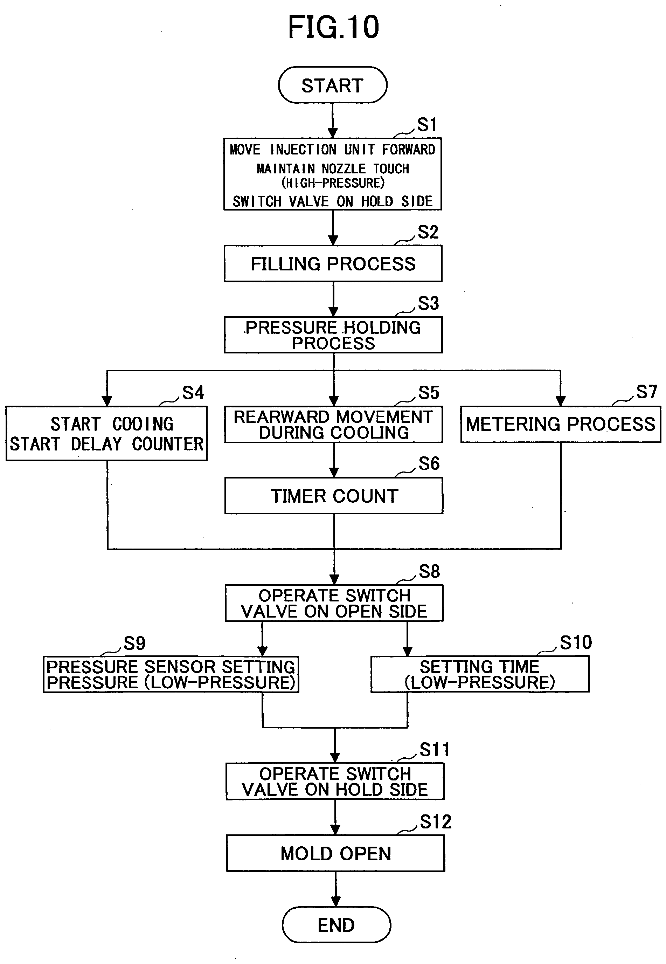

FIG. 10 is a flowchart showing an example of a molding process performed in an injection molding machine provided with the plasticizer moving apparatus according to the above-mentioned first or second embodiment. The molding process shown in FIG. 10 is referred to as "nozzle touch pressure release molding process" which is a molding process for reducing a nozzle touch pressure when opening a mold. Reducing the nozzle touch pressure when opening a mold is referred to as "pressure release".

First, in step S1, the injection apparatus (injection unit) 402 is moved forward so as to perform a nozzle touch and a nozzle touch pressure is raised to a desired high-pressure. At this time, the hydraulic pump 424 is operated so that the working oil is supplied to the passage 430 side, and supplied the working oil to the front side of the hydraulic cylinder 420 by opening the switch valve 438. When the nozzle touch pressure becomes the desired pressure, the hydraulic pump 424 is stopped based on the detection signal of the pressure sensor 436, and the switch valves 438 and 448 are closed. Thereby, the hydraulic pressure on the front side of the hydraulic cylinder 420 is maintained and the nozzle touch pressure is also maintained at the high-pressure. Here, the high pressure is a contact pressure at which melted resin does not leak from a part between the nozzle 414 and the stationary mold 406 in the filling process or the pressure holding process. It should be noted that after the switch valves 438 and 448 are closed, the operation of the hydraulic pump is stopped or an idling drive is performed.

While the nozzle touch pressure is maintained at the desired value, the filling process is performed in step S2, and the melted resin is injected and filled from the injection apparatus 402 into the mold through the nozzle 414. After the filling process is completed, the pressure holding process is performed in step S3, and the pressure applied to the resin filled in the mold is maintained. Thereby, the melted resin is filled in the entire mold.

After the pressure holding process of step S3 is completed, the process proceeds to steps S4, S5 and S7. A cooling process is performed in step S4 so as to cool the melted resin in the mold by cooling the mold. A delay count is started at the same time the cooling process is started. When it reaches the time of completion of the delay count, i.e., a delayed time, the switch valves 438 and 448 are opened in step S5, and the hydraulic pump is driven reversely so as to move the injection apparatus 402 rearward ("rearward movement during cooling"). Subsequently, a count of a timer is started in step S6 so as to count a time until a start of the "pressure release", which is performed subsequently. Additionally, while the cooling process is performed in the mold, the screw is moved rearward while being rotated in step S7 in the injection apparatus 402 so as to perform a metering process of the melted resin.

It should be noted that since the injection apparatus 402 is moved rearward in the cooling process and the nozzle touch pressure is canceled when performing the "rearward movement during cooling", the pressure release in steps S8-S11 mentioned later is not performed. Moreover, a rearward movement ("rearward movement after metering") of the injection apparatus 402 may be performed without performing the rearward movement during cooling after the completion of the metering process. Additionally, when performing the "pressure release" to set the nozzle touch pressure to a low-pressure in the steps S8-S11 mentioned later, the delay count in the above-mentioned step S4 and the "rearward movement during cooling" or the "rearward movement after metering" of step S5 are not performed. In the present embodiment, selection can be made of one of a mode for performing the "rearward movement during cooling", a mode for performing the "rearward movement after metering" and a mode for performing only the "pressure release". Additionally, a timing for performing the "rearward movement during cooling", the "rearward movement after metering" and the "pressure release" can be set according to a count value of the timer of each.

After a predetermined count is completed in step S6, the switch valves 438 and 448 are opened in step S8 so as to reduce the hydraulic pressure on the front side of the hydraulic cylinder 420 to perform the "pressure release" to set the nozzle touch pressure to a low-pressure. Here, the low-pressure is a pressure at which the melted resin does not leak from a part between the nozzle 414 and the stationary mold 406 when a back pressure is applied in the metering process. At this time, the switch valves 438 and 448 may be open until the detection signal from the pressure sensor 436 indicates a predetermined low-pressure in step S9, or the switch valves 438 and 448 may be open for a setting time as in step S10.

After the nozzle touch pressure is set to the predetermined low-pressure, the switch valves 438 and 448 are closed in step S11. Then, the movable mold 10 is moved, in step S12, so as to open the mold, and a molded product is taken out of the mold and the molding process at this time is ended.

According to the nozzle touch method used in the above-mentioned molding process, the nozzle touch pressure can be held at the high-pressure by closing the switch valves by providing a plurality of levels to the pressure setting value, and, thereafter, the nozzle touch pressure is reduced by opening the switch valves, and the switch valves are closed to maintain the low-pressure when the nozzle touch pressure is set to the predetermined low-pressure. Thus, the nozzle touch pressure is controllable only by operations of the switch valves, and mechanical moving operations or the like is unnecessary and the nozzle touch pressure can be controlled with a simple structure.

Moreover, the high-pressure setting value and the low-pressure setting value may be computed based on the previously determined specification values of the screw, and may be computed based on a detection value of the filling pressure and a detection value of the back pressure which are detected during molding.

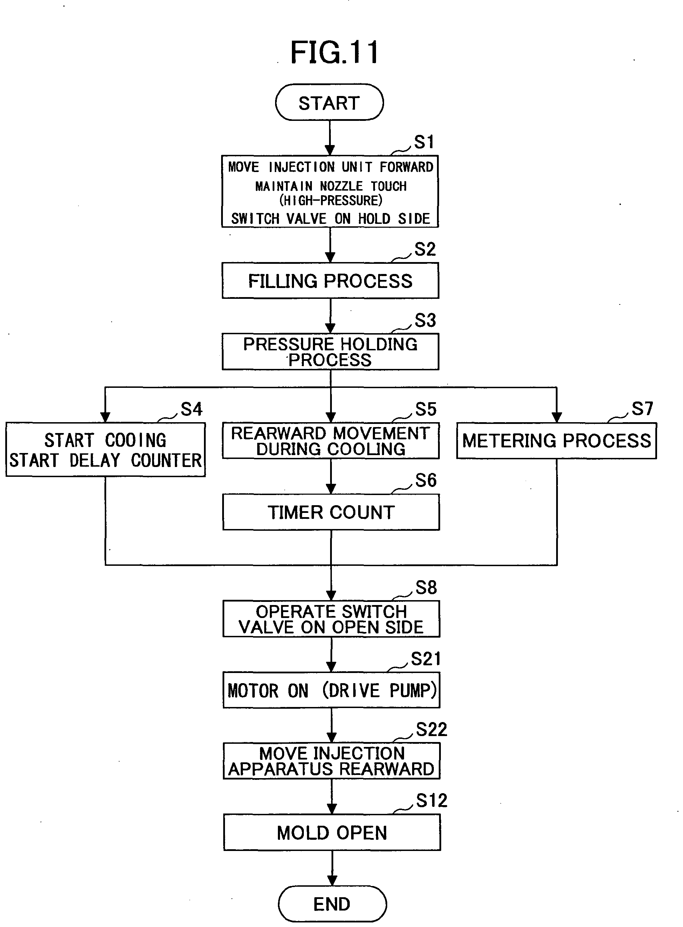

FIG. 11 is a flowchart showing an example of a molding process performed in the injection molding machine provided with the plasticizer moving apparatus according to the above-mentioned first or second embodiment. The molding process shown in FIG. 11 is referred to as a "nozzle touch force touch back molding process", which is a molding process for temporarily separate the nozzle 414 from the stationary mold 406 by moving the injection apparatus 402 rearward when opening the mold.

Steps S1-S8 are the same as the "nozzle touch pressure release molding process" shown in FIG. 3. When the switch valves 438 and 448 are opened in step S8, the hydraulic pump 424 (induction motor 428) is driven in step S21 (driven opposite to step S1), and the working oil on the front side of the hydraulic cylinder 420 is transported to the rear side of the hydraulic cylinder 420 by the hydraulic pump 424. Thereby, the injection apparatus 402 is moved rearward in step S22, and the nozzle 414 separates from the stationary mold 406. The rearward movement of the injection apparatus in step S22 is equivalent to above-mentioned "rearward movement after metering". Thereafter, the movable mold is moved in step S412 so as to open the mold, and a molded product is taken out of the moled and the molding process at this time is ended.

According to the nozzle touch method used in the above-mentioned molding process, the nozzle touch pressure is maintained at the high-pressure by closing the switch valves, and, thereafter, the nozzle touch is cancelled by moving the injection apparatus rearward by reversing the hydraulic pump by closing the switching valves. Therefore, the nozzle touch pressure is controllable only by the operations of the switch valves, and the operation of the hydraulic pump, and mechanical moving operations or the like are unnecessary and the nozzle touch can be controlled with a simple structure.

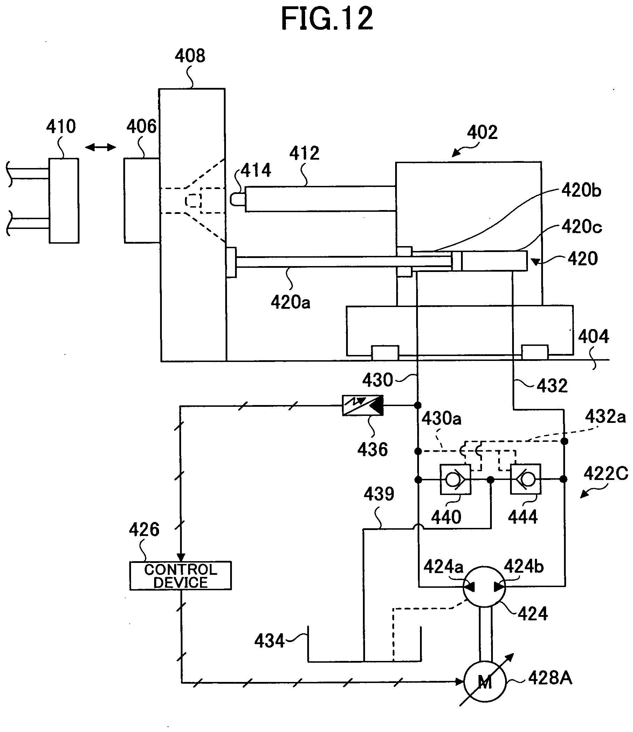

Next, a description will be given, with reference to FIG. 12, of a third embodiment of a plasticizer moving apparatus according to the present invention. FIG. 12 is a view showing an entire structure of the third embodiment of the plasticizer moving apparatus according to the present invention. It should be noted that, in FIG. 12, parts that are the same as the parts shown in FIG. 8 are given the same reference numerals, and descriptions thereof will be omitted.

The plasticizer moving apparatus shown in FIG. 12 is a move mechanism for moving the injection apparatus 402, and comprises the hydraulic cylinder 420 as a fluid-pressure actuator, a hydraulic circuit 422C which supplies a working oil, which is a working medium, to the hydraulic cylinder 420, the bidirectionally rotatable hydraulic pump 424 as a fluid-pressure source which generates a hydraulic pressure (fluid-pressure of working fluid) of the working oil, and the control device 426 which controls the hydraulic pump 424. The hydraulic pump 424 can be driven reversely in the present embodiment, and is driven by a servomotor 428A as an electric motor of which rotation speed is controllable.

An extreme end of the shaft 420a of the hydraulic cylinder 420 is fixed to the stationary platen 408, and the entire injection apparatus 402 is moved toward the stationary platen 408 (that is, the mold) (this direction is referred to as forward) by supplying the working oil pressurized by the hydraulic pump 424 to the rear side of the hydraulic cylinder 420 though the passage 430 which is a hydraulic piping. On the other hand, the entire injection apparatus 2 is moved in a direction (this direction is referred to as rearward) separating from the stationary platen 408 (that is, the mold) by supplying the working oil pressurized by the hydraulic pump 424 to the front side of the hydraulic cylinder 420 though the passage 432.

The passage 430 is connected to one suction and discharge port 424a (first suction and discharge port) of the hydraulic pump 424, and the passage 432 is connected to the other suction and discharge port 424b (second suction and discharge port) of the hydraulic pump 424. By switching the rotation direction of the servomotor 428A, the hydraulic pump 424 can suction the working oil from one of the suction and discharge ports 424a and 424b and discharge the working oil from the other so as to generate a hydraulic pressure. The rotating speed and the rotating direction of the servomotor 428A are controlled by the control device 426. It should be noted that the hydraulic pump 424 may also suction the working oil from the tank 434 and discharge the working oil from one of the discharge ports 424a and 424b.

Moreover, the passage 430 is connected to a front side oil chamber 420b of the hydraulic cylinder 420, and the passage 432 is connected to a rear side oil chamber 420c of the hydraulic cylinder 420. Here, since the shaft 420a penetrates through inside the front side oil chamber 420b, the cross-sectional area of the front side oil chamber 420b is smaller than the cross-sectional area of the rear side oil chamber 20c. However, by setting the side to which the working oil is supplied to the front side when generating a nozzle touch pressure, the hydraulic cylinder 420 can be arranged on the injection apparatus 402 and the molding machine can be compact.

In a middle of the passage 430 which supplies the working oil to the front side of the hydraulic cylinder 420, a pressure sensor 436 is provided. The pressure sensor 436 detects the oil pressure of the passage 430, and sends a detection signal to the control device 426. The pressure sensor 436 is provided in the passage 430 near the hydraulic cylinder 420, and the oil pressure detected by the pressure sensor 436 is nearly equal to an oil pressure in the hydraulic cylinder. Accordingly, the control device 426 can recognize the oil pressure in the hydraulic cylinder 420 by the detection signal from the pressure sensor 436. Since the nozzle touch pressure which moves the injection apparatus 402 forward to press the nozzle 414 is generated by the oil pressure in the hydraulic cylinder 420, the detection signal of the pressure sensor 436 is also a signal representing the nozzle touch pressure.

When the hydraulic pump 424 is operated and the working oil is discharged from the suction and discharge port 424a and supplied to the front side of the hydraulic cylinder 420, the injection apparatus 402 is moved forward. The nozzle 414 of the injection apparatus is brought into contact with the stationary platen 408 or the stationary mold 406 (nozzle touch). If the working oil is continuously supplied to the front side of the hydraulic cylinder 420 after the nozzle touch is made, the oil pressure in the hydraulic cylinder 420 goes up, and, thereby, the nozzle touch pressure goes up. When the nozzle touch pressure becomes a desired high-pressure, that is, when the detection signal of the pressure sensor becomes a predetermined level, the control device 426 controls the rotation of the servomotor 428A so as to control the output of the hydraulic pump 424 so that the pressure inside the hydraulic cylinder 420 is maintained constant at the desired high-pressure. Thereby, the oil pressure is maintained on the front side of the hydraulic cylinder 420, and the nozzle touch pressure is also maintained at the desired pressure.

It should be noted that although the above-mentioned pressure sensor 436 detects a pressure inside the hydraulic cylinder 420 as a nozzle touch pressure, other sensors such as, for example, a load cell may be used if they detect a nozzle touch pressure.

When reducing the nozzle touch pressure after maintaining the nozzle touch pressure at the high-pressure, the hydraulic pump 424 is reversed by reversing the servomotor 428A, and, thereby, the working oil on the front side of the hydraulic cylinder 420 flows into the suction and discharge port 424a of the hydraulic pump 424, and is discharged from the suction and discharge port 424b to the passage 432, and supplied to the rear side of the hydraulic cylinder 420. Thereby, the pressure on the front side of the hydraulic cylinder 420 is reduced, and the nozzle touch pressure is reduced. The low-pressure nozzle touch pressure can be maintained by controlling the rotating sped of the servomotor 428A when the nozzle touch pressure reaches the predetermined low-pressure.

Additionally, when the hydraulic cylinder 420 is operated by the working oil being supplied to the front side of the hydraulic cylinder 420, the working oil on the rear side of the hydraulic cylinder 420 flows through the passage 32 and is suctioned by the hydraulic pump 424 from the suction and discharge port 424b, and discharged to the passage 430 from the suction and discharge port 424a, and supplied to the front side of the hydraulic cylinder 420.

When moving the injection apparatus 402 rearward, the rotation of the servomotor 428A is reversed, and the working oil is discharged from the suction and discharge port 424b of the hydraulic pump 424 and supplied to the rear side of the hydraulic cylinder 420 through the passage 432.

It should be noted that check valves 440 and 444 are provided between the passage 430 and the passage 432 in the present embodiment, and a portion between the two check valves 440 and 444 is connected to the tank 434 by a drain passage 439. The check valves 440 and 444 and the drain passage 439 form a drain circuit for adjusting shortage and excess of an amount of circulation of the working oil due to a difference between volumes of the front side and the rear side of the hydraulic cylinder 420. For example, when the injection apparatus 402 is moved forward, the working oil is supplied to the front side oil chamber 420b from the pipe 430 and working oil is discharged from the rear side oil chamber 420c. In this case, since the cross-sectional area of the rear side oil chamber 420c is larger than the cross-sectional area of the front side oil chamber 420b, an amount of the working oil discharged from the rear side oil chamber 420c is larger than an amount of the working oil supplied to the front side oil chamber 420b. On the other hand, if the working oil is continuously supplied to the pipe 430 from the pump 424 so as to move the injection apparatus 402 forward, the pressure of the working oil in the pipe 430 becomes high, the working oil in the pipe 430 is transmitted to the pipe 430a and acts to open the check valve 444 of the pipe 432. Then, if the check valve 444 is opened, the working oil discharged from the rear side oil chamber 420c is returned to the tank 434 by passing through the check valve 444 and the drain passage 439. Accordingly, shortage and excess of the working oil in the pipe 430 and the pipe 432 can be adjusted.

In the above-mentioned hydraulic circuit 422C, since a number of valves is small, the system is simplified and becomes compact. Additionally, an influence of the noise due to a valve operation is small. Further, since the hydraulic piping is simplified in the hydraulic circuit 422C, there are a small number of parts where leakage of the working oil may occur, which provides excellent reliability.

Moreover, in the above-mentioned hydraulic circuit 422C, the high-pressure working oil on the front side or the rear side of the hydraulic cylinder 420 is once suctioned by the hydraulic pump 424 and is discharged by the hydraulic pump. At this time, only an excessive amount of the working oil is returned to the tank 434. Accordingly, the high-pressure working oil is never returned directly to the tank. If the high-pressure working oil is returned to the tank 434, it is possible that the oil surface in the tank 434 waves and air may enter the working oil. Especially when the tank 434 is made small, the possibility of mixture of air is high. However, according to the hydraulic circuit 422C in the present embodiment, since the working oil does not return directly to the tank 434, mixture of air due to that can be prevented.

Additionally, in the above-mentioned hydraulic circuit 422C, the working oil from the front side of the hydraulic cylinder 420 is returned to the rear side of the hydraulic cylinder 420 through the hydraulic pump 424. Here, in the case whether the working oil from the front side of the hydraulic cylinder 420 is returned to the tank 434 and thereafter suctioned and discharged by the hydraulic pump 424 so as to supply to the rear side of the hydraulic cylinder 420, it is necessary to suction and discharge the working oil after returning the working oil (the working oil on the front side of the hydraulic cylinder 420) corresponding to pressure release, and, thus, in order to start the rearward movement of the injection apparatus, it is necessary to wait for the return of the working oil to the tank. However, in the hydraulic circuit 422C according to the above-mentioned present embodiment, since the working oil is discharged immediately after returning to the hydraulic pump 424, the rearward moving operation can be started immediately, which reduces a cycle time of molding.

As mentioned above, in the present embodiment, the nozzle touch pressure is controlled and maintained at a desired pressure by the simple structure in which a hydraulic pressure is generated by the pump 424 driven by the servomotor 428A and the rotating speed and the rotating direction of the servomotor 428A are controlled by the control device 426 based on the detection signal from the pressure sensor 436.

Additionally, since the working oil on the front side and rear side of the hydraulic cylinder 420 is circulated through the hydraulic pump, the suction pressure of the hydraulic pump 424 is the pressure in the hydraulic cylinder, which is higher than an atmospheric pressure, and the compression ratio is reduced, and, thus, the hydraulic pump 424 can be operated efficiently. Additionally, there is no need to pressurize again after the pressure of the working oil is returned to an atmospheric pressure (that is, after returning to the tank 434), and heat generation of the working oil is also suppressed, and, thus, degradation of the working oil can be suppressed.

Moreover, since there is no orifice, which may limit a flow of the working oil, provided to the hydraulic circuit 422C, a response in a pressure control of the hydraulic cylinder 420 is good, and, for example, a rearward moving operation of the injection apparatus 402 when performing setback molding as mentioned later can be performed rapidly. Further, heat generation of the working oil can be suppressed.

Additionally, since a flow of the working oil is switched by switching the rotating direction of the hydraulic pump 424 based on the detection signal of the pressure sensor 436, the circuit structure is simple as compared to a hydraulic pressure control circuit which controls a pressure using a pressure switch or the like.

Further, since the hydraulic actuator (hydraulic cylinder 420) is used, there is no part which is worn such as a ball screw, and a moving mechanism having a long service life can be realized.

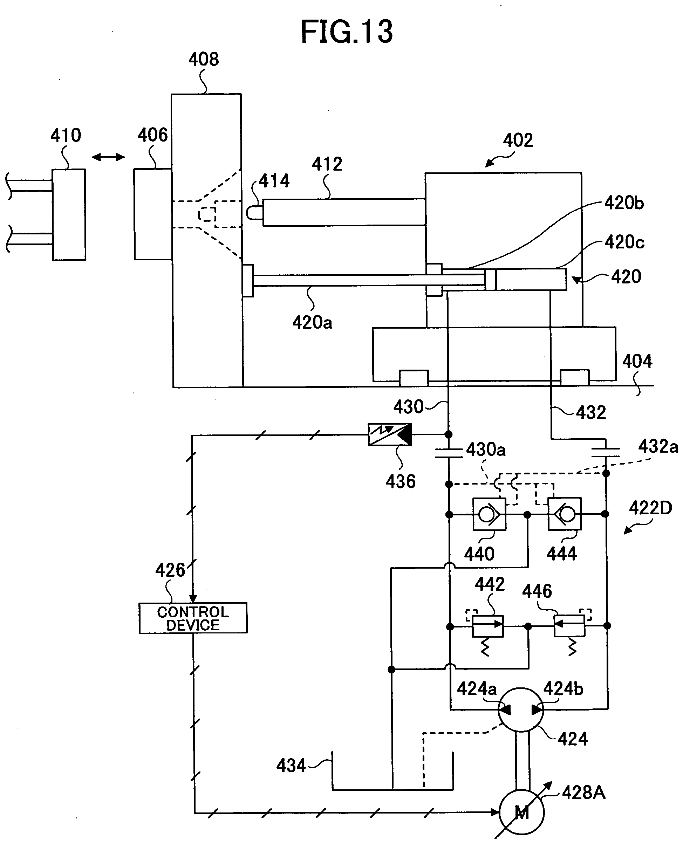

Next, a description will be given, with reference to FIG. 13, of a fourth embodiment of the plasticizer moving apparatus according to the present invention. FIG. 13 is a view showing an entire structure of the fourth embodiment of the plasticizer moving apparatus according to the present invention. In FIG. 13, parts that are the same as the parts shown in FIG. 8 are given the same reference numerals, and descriptions thereof will be omitted.

The fourth embodiment of the plasticizer moving apparatus according to the present invention has a basic structure the same as the above-mentioned first embodiment, and it is different in that safety valves 442 and 446 are provided to a hydraulic circuit 422D. The safety valves 442 and 446 are relief valves which relief a pressure when a hydraulic pressure reaches a setting pressure. The setting pressure (relief pressure) is set to a high-pressure which is not reached in a normal operation of the hydraulic circuit, and the safety valves 442 and 446 carry out a function to protect the hydraulic circuit when an abnormally high-pressure is formed in the hydraulic circuit due to some kind of problem.

Specifically, the safety valve 442 is connected in the middle of the passage 430 and prevent the passage 430 from being damaged by relieving a pressure when a hydraulic pressure in the passage 430 becomes an abnormally high-pressure. Similarly, the safety valve 446 is connected in the middle of the passage 432 and prevent the passage 432 from being damaged by relieving a pressure when a hydraulic pressure in the passage 432 becomes an abnormally high-pressure.

As mentioned above, in addition to the effects obtained by the above-mentioned third embodiment, a pressure can be released so as not to be equal to or higher than a setting pressure in the hydraulic circuit 422D, even if, for example, the hydraulic pump 424 malfunctions and an abnormally high-pressure is generated, by providing the safety valves 442 and 446, and the hydraulic circuit 422D can be prevented from being broken.

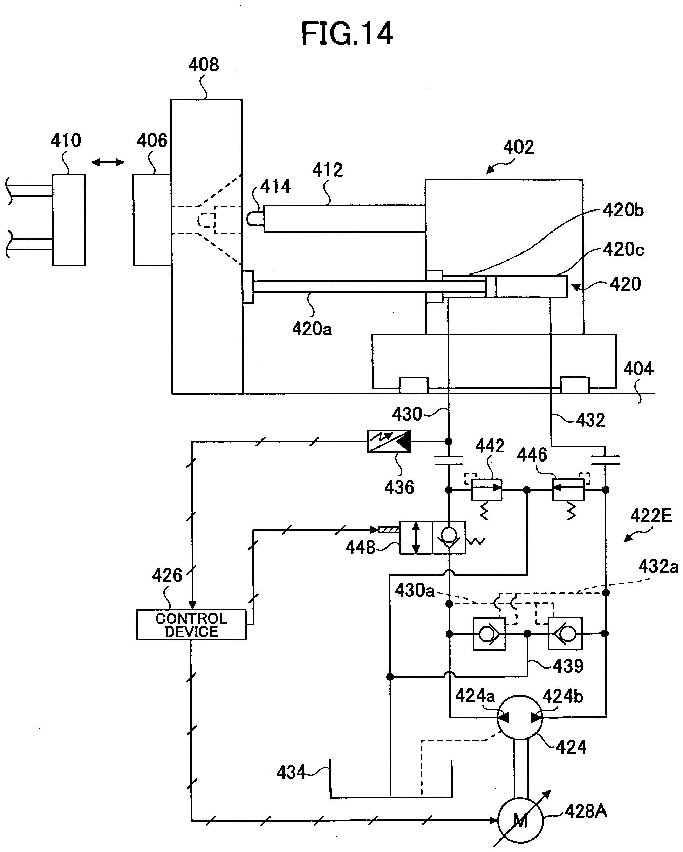

Next, a description will be given, with reference to FIG. 14, of a fifth embodiment of the plasticizer moving apparatus according to the present invention. FIG. 14 is a view showing an entire structure of the fifth embodiment of the plasticizer moving apparatus according to the present invention. In FIG. 14, parts that are the same as the parts shown in FIG. 12 and FIG. 13 are given the same reference numerals, and descriptions thereof will be omitted.

The fifth embodiment of the plasticizer moving apparatus according to the present invention has a basic structure the same as the above-mentioned first embodiment, and it is different in that safety valves 442 and 446 and a switch valve 448 are provided to a hydraulic circuit 422E. The safety vales 442 and 446 carry out a function the same as the above-mentioned fourth embodiment. The switch valve 448 may be a normal block type switch valve, but it is preferable to be a check valve type switch valve as shown in FIG. 3.

In the present embodiment, the pressure on the front side of the hydraulic cylinder 420 is maintained so as to maintain the nozzle touch pressure at a high-pressure by providing the switch valve 448 to the passage 430 and closing the switch valve 448 in the filing process and the pressure holding process. Accordingly, while the switch valve 448 is closed, the hydraulic pump 424 may be stopped without being driven or may be in an idling drive. Thereby, a drive time of the hydraulic pump 424 can be reduced, and the consumed electric power of the servomotor 428A can be reduced. Additionally, when maintaining the nozzle touch pressure at a low-pressure, the switch valve 448 may be closed and the drive of the hydraulic pump 424 is stopped or may be in an idling drive.

As mentioned above, according to the present embodiment, in addition to the effects obtained by the above-mentioned embodiment, the time during which the hydraulic pump 424 is driven can be reduced by providing the switch valve 448 to the passage 430, and a consumed electric power of the servomotor 428A can be reduced.

Next, a description will be given of a molding process performed by the injection molding machine using the plasticizer moving apparatus according to the above-mentioned third or fourth embodiment.

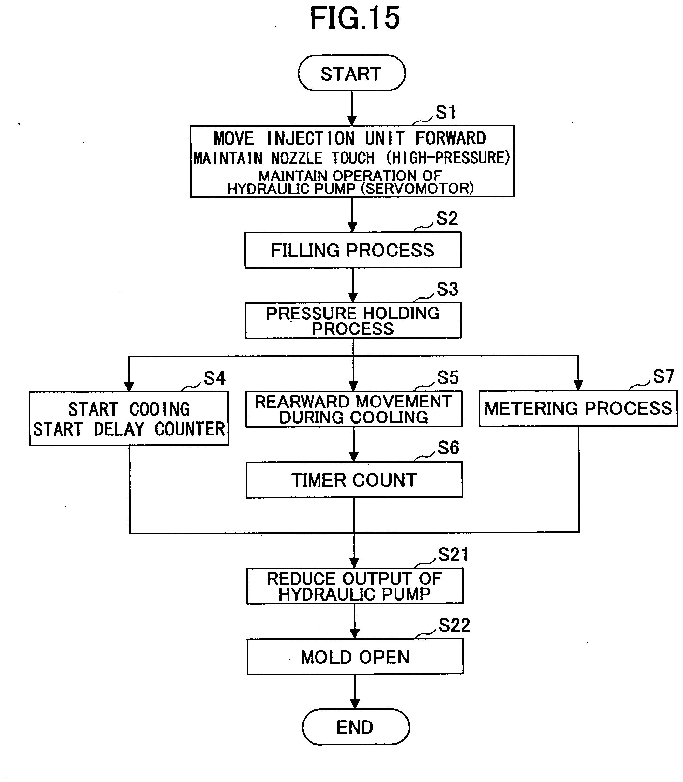

FIG. 15 is a flowchart showing an example of a molding process performed in an injection molding machine provided with the plasticizer moving apparatus according to the above-mentioned third or fourth embodiment. The molding process shown in FIG. 15 is referred to as "nozzle touch pressure release molding process" which is a molding process for reducing a nozzle touch pressure when opening a mold. Reducing the nozzle touch pressure when opening a mold is referred to as "pressure release".

First, in step S1, the injection apparatus (injection unit) 402 is moved forward so as to perform a nozzle touch and a nozzle touch pressure is raised to a high-pressure by driving the hydraulic pump 424 by driving the servo motor 428A. When the nozzle touch pressure becomes the desired pressure, the hydraulic pump 424 is controlled to be at a constant rotating speed so as to maintain the output of the hydraulic pump 424 based on the detection signal of the pressure sensor 436. Thereby, the hydraulic pressure on the front side of the hydraulic cylinder 420 is maintained at the desired high-pressure, and the nozzle touch pressure is also maintained at the high-pressure. Here, the high-pressure is a contact pressure at which melted resin does not leak from a part between the nozzle 414 and the stationary mold 406 in the filling process or the pressure holding process.

While the nozzle touch pressure is maintained at the desired value, the filling process is performed in step S2, and the melted resin is injected and filled from the injection apparatus 402 into the mold through the nozzle 414. After the filling process is completed, the pressure holding process is performed in step S3, and the pressure applied to the resin filled in the mold is maintained. Thereby, the melted resin is filled in the entire mold.

After the pressure holding process of step S3 is completed, the process proceeds to steps S4, S5 and S7. A cooling process is performed in step S4 so as to cool the melted resin in the mold by cooling the mold. A delay count is started at the same time the cooling process is started. When it reaches the time of completion of the delay count, i.e., a delayed time, the hydraulic pump 424 is driven reversely so as to move the injection apparatus 402 rearward ("rearward movement during cooling"). A count of a timer is started in step S6 so as to count a time until a start of the "pressure release", which is performed subsequently. Additionally, while the cooling process is performed in the mold, the screw is moved rearward while being rotated in step S7 in the injection apparatus 402 so as to perform a metering process of the melted resin.

It should be noted that since the injection apparatus 402 is moved rearward in the cooling process and the nozzle touch pressure is canceled when performing the "rearward movement during cooling", the pressure release in steps S21-S22 or S31-S33 mentioned later is not performed. Moreover, a rearward movement ("rearward movement after metering") of the injection apparatus 402 may be performed without performing the rearward movement during cooling after the completion of the metering process. Additionally, when performing the "pressure release" to set the nozzle touch pressure to a low-pressure in the steps S8-S11 mentioned later, the delay count in the above-mentioned step S4 and the "rearward movement during cooling" or the "rearward movement after metering" of step S5 are not performed. In the present embodiment, selection can be made of one of a mode for performing the "rearward movement during cooling", a mode for performing the "rearward movement after metering" and a mode for performing only the "pressure release". Additionally, a timing for performing the "rearward movement during cooling", the "rearward movement after metering" and the "pressure release" can be set according to a count value of the timer of each.

After a predetermined count is completed in step S6, the rotating speed of the servomotor 428A is reduced in step S21 so as to reduce a hydraulic pressure on the front side of the hydraulic cylinder 420 so perform the "pressure release" which sets the nozzle touch pressure at a low-pressure. Here, the low-pressure is a pressure at which the melted resin does not leak from a part between the nozzle 414 and the stationary mold 406 when a back pressure is applied in the metering process. Subsequently, in step S22, while maintaining the output of the hydraulic pump 424 (that is, the output of the servomotor 428A), the movable mold 410 is moved so as to open the mold, and a molded product is taken out of the mold and the molding process at this time is ended.

According to the nozzle touch method used in the above-mentioned molding process, the nozzle touch pressure can be held at the high-pressure, while driving the hydraulic pump, by providing a plurality of levels to the pressure setting value, and, thereafter, the nozzle touch pressure is reduced and maintained by reducing the output of the hydraulic pump. Thus, the nozzle touch pressure is controllable only by the operation the hydraulic pump (servomotor), and mechanical moving operations or the like is unnecessary and the nozzle touch pressure can be controlled with a simple structure.

Moreover, the high-pressure setting value and the low-pressure setting value may be computed based on the previously determined specification values of the screw, and may be computed based on a detection value of the filling pressure and a detection value of the back pressure which are detected during molding.

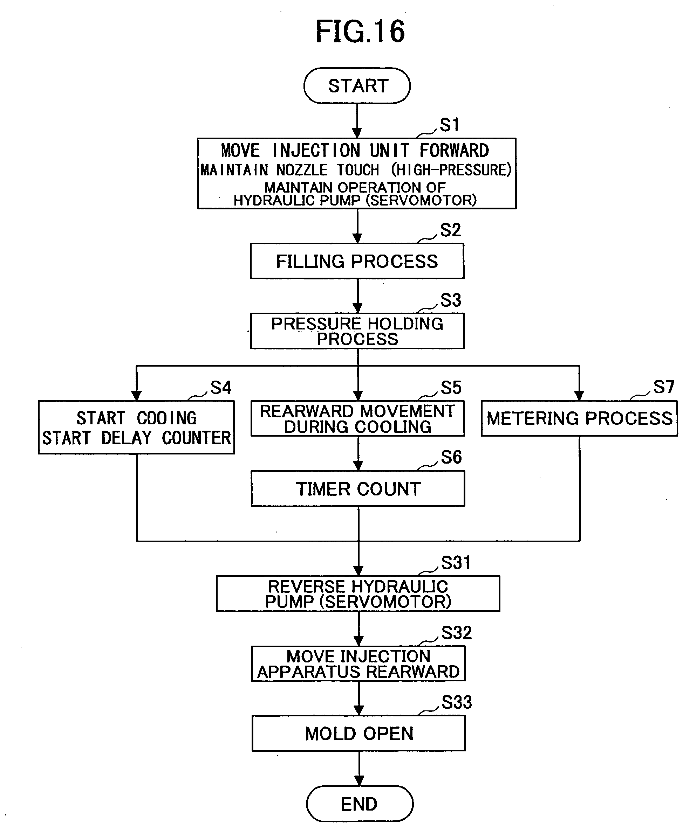

FIG. 16 is a flowchart showing an example of a molding process performed in the injection molding machine provided with the plasticizer moving apparatus according to the above-mentioned third or fourth embodiment. The molding process shown in FIG. 16 is referred to as a "nozzle touch force touch back molding process", which is a molding process for temporarily separate the nozzle 414 from the stationary mold 406 by moving the injection apparatus 402 rearward when opening the mold.

Steps S1-S7 are the same as the "nozzle touch pressure release molding process" shown in FIG. 15. After the timer count is completed in step S6, the rotation of the servomotor 428A is switched in step S310 so that the hydraulic pump 424 is reversed. Thereby, the hydraulic pump 424 suctions the working oil from the suction and discharge port 424a and discharge the working oil from the suction and discharge port 424b. Thereby, in step S32, the working oil is transported from the front side to the rear side of the hydraulic cylinder 420, and the injection apparatus 402 is moved rearward (equivalent to the "rearward movement after metering"). After the injection apparatus 402 is moved rearward and the nozzle 414 is separated from the stationary mold 406 (touch back), the movable mold 410 is moved, in step S33, so as to open the mold, and a molded product is taken out of the mold and the molding process at this time is ended.

According to the nozzle touch method used in the above-mentioned molding process, the nozzle touch pressure is maintained at the high-pressure while driving the hydraulic pump, and, thereafter, the injection apparatus is moved rearward by reversing the hydraulic pump so as to cancel the nozzle touch. Therefore, the nozzle touch pressure is controllable only by the operation of the hydraulic pump (servomotor), and mechanical moving operations or the like are unnecessary and the nozzle touch can be controlled with a simple structure.

Next, a description will be give of a molding process performed by an injection molding machine using the plasticizer moving apparatus according to the above-mentioned fifth embodiment.

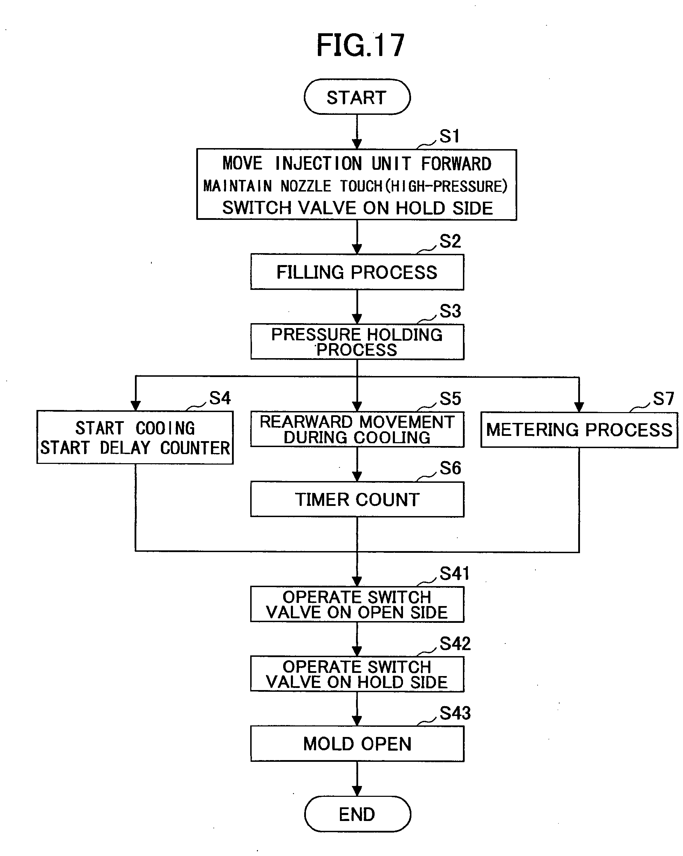

FIG. 17 is a flowchart showing an example of a molding process performed in an injection molding machine provided with the plasticizer moving apparatus according to the above-mentioned fifth embodiment. The molding process shown in FIG. 17 is referred to as "nozzle touch pressure release molding process" which is a molding process for reducing a nozzle touch pressure when opening a mold. Reducing the nozzle touch pressure when opening a mold is referred to as "pressure release".

The molding process shown in FIG. 17 is basically the same as the molding process shown in FIG. 15 and it differs in that the nozzle touch pressure of a high-pressure or a low-pressure is maintained by closing the switch valve 448. That is, in the molding process shown in FIG. 17, when the nozzle touch pressure becomes the high-pressure in step S1, the switch valve 48 is closed and the drive of the hydraulic pump 424 is stopped. Then, when the timer count of step S6 is completed, the switch valve 448 is opened in step S41 so as to perform the "pressure release" by reducing the pressure on the front side of the hydraulic cylinder 420. After the pressure on the front side of the hydraulic cylinder 420 is set to a predetermined low-pressure, the switch valve 448 is closed again in step S42 so as to maintain the low-pressure. Thereafter, the mold is opened in step S43, while maintaining the pressure release state, so as to take out a molded product.

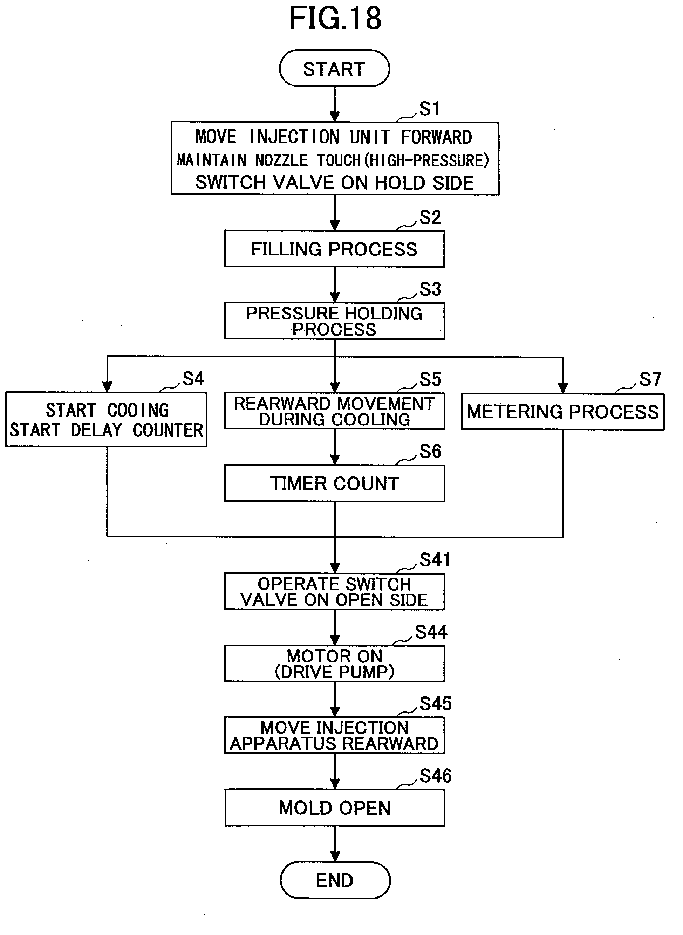

FIG. 18 is a flowchart showing an example of a molding process performed in an injection molding machine provided with the plasticizer moving apparatus according to the above-mentioned fifth embodiment. The molding process shown in FIG. 18 is referred to as "nozzle touch pressure touch back molding process" which is a molding process for temporarily separating the nozzle 414 from the stationary mold 406 by moving the injection apparatus 402 rearward when opening a mold.

The steps S1-S7 and S41 are the same as the "nozzle touch pressure release molding process" shown in FIG. 6. When the switch valve 448 is opened in step S41, the hydraulic pump 424 (servomotor 428A) is driven in step S44 (driven opposite to step S1), and the working oil on the front side of the hydraulic cylinder 420 is transported to the rear side of the hydraulic cylinder 420 by the hydraulic pump 424. Thereby, the injection apparatus 402 is moved rearward in step S45 and the nozzle 414 is separated from the stationary mold 406. Thereafter, the movable mold 410 is moved in step S46 so as to open the mold, and a molded product is taken out of the mold and the molding process at this time is ended.

It should be noted that although examples of using the hydraulic cylinder has been explained in the above mentioned embodiments, an air cylinder driven by a compressed air may be used instead of the hydraulic cylinder.

The present invention is not limited to the above-mentioned specifically disclosed embodiments, and various variations and modification may be made without departing the scope of the present invention as defined by the appended claims.

### INDUSTRIAL APPLICABILITY

The present invention is applicable to an injection molding machine having a hydraulic actuator which drives a movable part by a fluid-pressure. Moreover, the present invention is applicable to a plasticizer moving apparatus of an electric injection molding machine having a plasticizer moving apparatus that moves an injection apparatus for injecting a resin into a mold while melting in an electric injection molding machine and a nozzle touch method performed by such a plasticizer moving apparatus.

## Claims

1. An injection molding machine comprising:
a movable part (60) arranged on an injection apparatus base (72) which is movable with respect to a molding machine frame (50);
a hydraulic actuator (74) fixed to the movable part (60);
a hydraulic pump unit (100) fixed to said movable part (60) so as to supply a generated fluid-pressure to the hydraulic actuator (74); and
a hydraulic passage (76A, 76B) provided to said movable part (60) so as to connect said hydraulic pump unit (100) and said hydraulic actuator (74),
wherein said hydraulic actuator (74), said hydraulic pump unit (100) and said hydraulic passage (76A, 76B) move with a movement of said movable part (60),
**characterized in that**
said movable part (60) is an injection apparatus, and said hydraulic actuator (74) is a hydraulic cylinder which is a drive source of a moving mechanism that moves the injection apparatus (60), and wherein said hydraulic pump unit (100) is turnable together with the injection apparatus (60) relative to the injection apparatus base (72) .

2. The injection molding machine as claimed in claim 1, wherein said hydraulic pump unit (100) is a single unit in which a hydraulic pump (120) driven by an electric motor (111) and a tank (125) storing a working fluid discharged from the hydraulic pump (120) are integrated.

3. The injection molding machine as claimed in claim 1 or 2, wherein the injection apparatus (60) has an injection member (63) that is adapted to inject a molding material into a mold (81, 83), and has a plurality of said hydraulic actuators (74) attached to a plurality of positions which are symmetric positions with respect the injection member (63).

4. The injection molding machine as claimed in claim 2, wherein said electric motor (428) is rotatable in both directions, and said hydraulic passage (430, 432) includes:
a first working-fluid passage (430) connected between said hydraulic pump unit (424, 428, 434) and said hydraulic actuator (420) so as to move said injection apparatus (402) in a direction toward said mold (406, 410) by supplying a working fluid discharged from said hydraulic pump unit (424, 428, 434) to said hydraulic actuator (420); and
a second working-fluid passage (432) connected between said hydraulic pump unit (424) and said hydraulic actuator (420) so as to move said injection apparatus (402) in a direction separating from said mold (406, 410) by supplying a working fluid discharged from said hydraulic pump unit (424, 428, 434) to said hydraulic actuator (420),
the injection molding machine further comprising:
a switch valve (438) provided to said first working-fluid passage (430) so as to control a flow of the working fluid by opening and closing said first working-fluid passage (430); and
a control device (426) that is configured to control operations of said hydraulic pump unit (424, 428, 434) and said switch valve (438).

5. The injection molding machine as claimed in claim 4, further comprising a pressure detector (436) for detecting a pressure of the working fluid between said switch valve (438) and said hydraulic actuator (420) and supplying a detection signal to said control device (426), and wherein said control device (426) is configured to control the operation of said switch valve (438) based on the detection signal so that the pressure detected by said pressure detector (436) is set to a setting value set by an input device.

6. The injection molding machine as claimed in claim 4 or 5, wherein said switch valve (448) has a function as a check valve for a flow of the working fluid from said hydraulic pump unit (424, 428, 434) toward said hydraulic actuator (420).

7. The injection molding machine as claimed in claim 2, wherein said electric motor (428A) is a servomotor, and said hydraulic passage (430, 432) includes:
a first working-fluid passage (430) connected between said hydraulic pump unit (424, 428A, 434) and said hydraulic actuator (420) so as to move said injection apparatus (402) in a direction toward said mold (406, 410) by supplying a working fluid discharged from said hydraulic pump unit (424, 428A, 434) to said hydraulic actuator (420); and
a second working-fluid passage (432) connected between said hydraulic pump unit (424, 428A, 434) and said hydraulic actuator (420) so as to move said injection apparatus (402) in a direction separating from said mold (406, 410) by supplying a working fluid discharged from said hydraulic pump unit (424, 428A, 434) to said hydraulic actuator (420),
the injection molding machine further comprising:
a pressure detector (436) adapted for detecting a pressing force applied to a mold (406, 410) from said movable part (402) so as to output a detection signal; and
a control device (426) that is configured to control an operation of said servomotor (428A) driving said hydraulic pump unit (424, 428A, 434) based on the detection signal.

8. The injection molding machine as claimed in claim 7, further comprising a switch valve (448) for opening and closing said first working-fluid passage (430), and wherein said control device (426) is configured to control operations of said hydraulic pump unit (424, 428A, 434) and said switch valve (438) based on said detection signal, and said switch valve (448) has a function as a check valve for a flow of the working fluid from said hydraulic pump unit (424, 428A, 434) toward said hydraulic actuator (420).

9. The injection molding machine as claimed in claim 8, wherein said control device (426) is configured to control the operation of said switch valve (448) based on said detection signal so that the pressure detected by said pressure detector (436) is set to a setting value set by an input device.

10. The injection molding machine as claimed in claim 5 or 9, wherein said setting value contains at least two setting values which are a high-pressure setting value and a low-pressure setting value.

11. The injection molding machine as claimed in claim 10, wherein said control device (426) is configured to perform a control using said low-pressure setting value after completion of a metering process or during a cooling process.

12. The injection molding machine as claimed in claim 10, wherein said control device (426) is configured to perform a control using said high-pressure setting value during a filling process.

13. The injection molding machine as claimed in claim 5 or 9, wherein said control device (426) is configured to calculate said setting value based on at least one value from among a specification value of a screw (412), a detected filling pressure value and a detected back pressure value.

14. The injection molding machine as claimed in claim 4 or 8, wherein said control device (426) is configured to perform at least one of a control of a rearward movement of said injection apparatus (402) or a low-pressure control of a nozzle touch pressure after a predetermined time has passed since a start of a cooling process.

15. The injection molding machine as claimed in claim 4 or 8, wherein said control device (426) is configured to perform at least one of a control of a rearward movement of said injection apparatus (402) and a low-pressure control of a nozzle touch pressure after a predetermined time has passed since a start of a metering process.

16. The injection molding machine as claimed in claim 7, wherein said servomotor (428A) of said hydraulic pump unit (424, 428A, 434) is a reversible servomotor, and said hydraulic pump (424) has a first suction and discharge port (424a) to which said first working-fluid passage (430) is connected and a second suction and discharge port (424b) to which said second working-fluid passage (432) is connected, and a rotating direction and a rotating speed of said servomotor (428A) are controlled by said control device (426).

## Patentansprüche

1. Spritzgussmaschine, die Folgendes aufweist:
einen bewegbaren Teil (60), der an einer Einspritzvorrichtungsbasis (72) angeordnet ist, die bezüglich eines Gussmaschinenrahmens (50) bewegbar ist;
eine hydraulische Betätigungsvorrichtung (74), die an dem bewegbaren Teil (60) befestigt ist;
eine Hydraulikpumpeneinheit (100), die an dem bewegbaren Teil (60) befestig ist, um einen erzeugten Strömungsmitteldruck zu der hydraulischen Betätigungsvorrichtung (74) zu liefern; und
einen Hydraulikdurchlass (76A; 76B), der an dem bewegbaren Teil (60) vorgesehen ist, um die Hydraulikpumpeneinheit (100) und die hydraulische Betätigungsvorrichtung (74) zu verbinden,
wobei die hydraulische Betätigungsvorrichtung (74), die Hydraulikpumpeneinheit (100) und der Hydraulikdurchlass (76A; 76B) sich mit einer Bewegung des bewegbaren Teils (60) bewegen,
**dadurch gekennzeichnet, dass**
der bewegbare Teil (60) eine Einspritzvorrichtung ist und die hydraulische Betätigungsvorrichtung (74) ein Hydraulikzylinder ist, der eine Antriebsquelle eines Bewegungsmechanismus ist, der die Einspritzvorrichtung (60) bewegt, und wobei die Hydraulikpumpeneinheit (100) zusammen mit der Einspritzvorrichtung (60) relativ zu der Einspritzvorrichtungsbasis (72) drehbar ist.

2. Spritzgussmaschine nach Anspruch 1, wobei die Hydraulikpumpeneinheit (100) eine einzelne Einheit ist, in welcher eine Hydraulikpumpe (120), die durch einen Elektromotor (111) angetrieben wird, und ein Tank (125), der ein Arbeitsströmungsmittel speichert, welches aus der Hydraulikpumpe (120) ausgegeben wird, integriert sind.

3. Spritzgussmaschine nach Anspruch 1 oder 2, wobei die Einspritzvorrichtung (60) ein Einspritzglied (63) hat, welches ausgebildet ist, um ein Gussmaterial in eine Form (81, 83) einzuspritzen, und die eine Vielzahl der hydraulischen Betätigungsvorrichtungen (74) hat, die an einer Vielzahl von Positionen angebracht sind, die symmetrische Positionen bezüglich des Einspritzgliedes (63) sind.

4. Spritzgussmaschine nach Anspruch 2, wobei der Elektromotor (428) in beiden Richtungen drehbar ist, und wobei der Hydraulikdurchlass (430, 432) Folgendes aufweist:
einen ersten Arbeitsströmungsmitteldurchlass (430), der zwischen der Hydraulikpumpeneinheit (424, 428, 434) und der hydraulischen Betätigungsvorrichtung (420) angeschlossen ist, um die Einspritzvorrichtung (402) in einer Richtung zu der Form (406, 410) hin zu bewegen, und zwar durch Liefern eines Arbeitsströmungsmittels, welches aus der Hydraulikpumpeneinheit (424, 428, 434) ausgegeben wurde, an die hydraulische Betätigungsvorrichtung (420); und
einen zweiten Arbeitsströmungsmitteldurchlass (432), der zwischen der Hydraulikpumpeneinheit (424) und der hydraulischen Betätigungsvorrichtung (420) angeschlossen ist, um die Einspritzvorrichtung (402) in einer Richtung zu bewegen, welche eine Trennung von der Form (406, 410) hervorruft, und zwar durch Liefern eines Arbeitsströmungsmittels, welches aus der Hydraulikpumpeneinheit (424, 428, 434) ausgegeben wird, an die hydraulische Betätigungsvorrichtung (420),
wobei die Spritzgussmaschine weiter Folgendes aufweist:
ein Schaltventil (438), welches an dem ersten Arbeitsströmungsmitteldurchlass (430) vorgesehen ist, um einen Fluss des Arbeitsströmungsmittels durch Öffnen und Schließen des ersten Arbeitsströmungsmitteldurchlasses (430) zu steuern; und
eine Steuervorrichtung (426), die konfiguriert ist, um Betriebsvorgänge der Hydraulikpumpeneinheit (424, 428, 434) und des Schaltventils (438) zu steuern.

5. Spritzgussmaschine nach Anspruch 4, die weiter einen Druckdetektor (436) aufweist, um einen Druck des Arbeitsströmungsmittels zwischen dem Schaltventil (438) und der hydraulischen Betätigungsvorrichtung (420) zu detektieren, und um ein Detektionssignal zu der Steuervorrichtung (426) zu liefern, und wobei die Steuervorrichtung (426) konfiguriert ist, um den Betrieb des Schaltventils (438) basierend auf dem Detektionssignal zu steuern, so dass der Druck, der von dem Druckdetektor (436) detektiert wird, auf einen Einstellungswert eingestellt wird, der durch eine Eingabevorrichtung eingestellt wurde.

6. Spritzgussmaschine nach Anspruch 4 oder 5, wobei das Schaltventil (448) eine Funktion eines Rückschlagventils für einen Fluss des Arbeitsströmungsmittels von der Hydraulikpumpeneinheit (424, 428, 434) zu der hydraulischen Betätigungsvorrichtung (420) hat.

7. Spritzgussmaschine nach Anspruch 2, wobei der Elektromotor (428A) ein Servomotor ist, und wobei der Hydraulikdurchlass (430, 432) Folgendes aufweist:
einen ersten Arbeitsströmungsmitteldurchlass (430), der zwischen der Hydraulikpumpeneinheit (424, 428A, 434) und der hydraulischen Betätigungsvorrichtung (420) angeschlossen ist, um die Einspritzvorrichtung (402) in einer Richtung zu der Form (406, 410) hin zu bewegen, und zwar durch Liefern eines Arbeitsströmungsmittels, welches aus der Hydraulikpumpeneinheit (424, 428A, 434) ausgegeben wurde, an die hydraulische Betätigungsvorrichtung (420); und
einen zweiten Arbeitsströmungsmitteldurchlass (432), der zwischen der Hydraulikpumpeneinheit (424, 428A, 434) und der hydraulischen Betätigungsvorrichtung (420) angeschlossen ist, um die Einspritzvorrichtung (402) in einer Richtung zu bewegen, welche eine Trennung von der Form (406, 410) hervorruft, und zwar durch Liefern eines Arbeitsströmungsmittels, welches aus der Hydraulikpumpeneinheit (424, 428A, 434) ausgegeben wurde, an die hydraulische Betätigungsvorrichtung (420),
wobei die Spritzgussmaschine weiter Folgendes aufweist:
einen Druckdetektor (436), der zum Detektieren einer Druckkraft ausgebildet ist, die auf eine Form (406, 410) von dem bewegbaren Teil (402) aufgebracht wird, um ein Detektionssignal auszugeben; und
eine Steuervorrichtung (426), die konfiguriert ist, um einen Betriebsvorgang des Servomotors (428A) der die Hydraulikpumpeneinheit (424, 428A, 434) antreibt, basierend auf dem Detektionssignal zu steuern.

8. Spritzgussmaschine nach Anspruch 7, die weiter ein Schaltventil (448) zum Öffnen und Schließen des ersten Arbeitsströmungsmitteldurchlasses (430) aufweist, und wobei die Steuervorrichtung (426) konfiguriert ist, um Betriebsvorgänge der Hydraulikpumpeneinheit (424, 428A, 434) und des Schaltventils (448) basierend auf dem Detektionssignal zu steuern, und wobei das Schaltventil (448) eine Funktion als ein Rückschlagventil für einen Fluss des Arbeitsströmungsmittels von der Hydraulikpumpeneinheit (424, 428A, 434) zu der hydraulischen Betätigungsvorrichtung (420) hat.

9. Spritzgussmaschine nach Anspruch 8, wobei die Steuervorrichtung (426) konfiguriert ist, um den Betrieb des Schaltventils (448) basierend auf dem Detektionssignal so zu steuern, dass der Druck, der durch den Druckdetektor (436) detektiert wird, auf einen Einstellwert eingestellt wird, der durch eine Eingabevorrichtung eingestellt wurde.

10. Spritzgussmaschine nach Anspruch 5 oder 9, wobei der Einstellwert zumindest zwei Einstellwerte enthält, die ein Hochdruckeinstellwert und ein Niederdruckeinstellwert sind.

11. Spritzgussmaschine nach Anspruch 10, wobei die Steuervorrichtung (426) konfiguriert ist, um eine Steuerung unter Verwendung des Niederdruckeinstellwertes auszuführen, und zwar nach der Vollendung eines Zumess- bzw. Dosierungsvorgangs oder während eines Abkühlungsvorgangs.

12. Spritzgussmaschine nach Anspruch 10, wobei die Steuervorrichtung (426) konfiguriert ist, um eine Steuerung unter Verwendung des Hochdruckeinstellwertes während eines Füllvorgangs auszuführen.

13. Spritzgussmaschine nach Anspruch 5 oder 9, wobei die Steuervorrichtung (426) konfiguriert ist, um den Einstellwert basierend auf zumindest einem Wert aus einem Spezifikationswert einer Schnecke (412), einem detektierten Fülldruckwert und einem detektierten Rückdruckwert zu berechnen.

14. Spritzgussmaschine nach Anspruch 4 oder 8, wobei die Steuervorrichtung (426) konfiguriert ist, um eine Steuerung einer Rückwärtsbewegung der Einspritzvorrichtung (402) und/oder eine Niederdrucksteuerung eines Düsenberührungs- bzw. Düsenaufsetzdruckes auszuführen, nachdem eine vorbestimmte Zeit seit einem Beginn eines Abkühlungsvorgangs verstrichen ist.

15. Spritzgussmaschine nach Anspruch 4 oder 8, wobei die Steuervorrichtung (426) konfiguriert ist, um eine Steuerung einer Rückwärtsbewegung der Spritzgussvorrichtung (402) und/oder eine Niederdrucksteuerung eines Düsenberührungs- bzw. Düsenaufsetzdruckes auszuführen, nachdem eine vorbestimmte Zeit seit einem Beginn eines Zumess- bzw. Dosierungsvorgangs verstrichen ist.

16. Spritzgussmaschine nach Anspruch 7, wobei der Servomotor (428A) der Hydraulikpumpeneinheit (424, 428A, 434) ein umschaltbarer Servomotor ist, und wobei die Hydraulikpumpe (424) einen ersten Ansaug- und Auslassanschluss (424a) hat, mit welchem der erste Arbeitsströmungsmitteldurchlass (430) verbunden ist, und einen zweiten Ansaug- und Auslassanschluss (424b), mit welchem der zweite Arbeitsströmungsmitteldurchlass (432) verbunden ist, und wobei eine Drehrichtung und eine Drehzahl des Servomotors (428A) durch die Steuervorrichtung (426) gesteuert werden.

## Revendications

1. Machine de moulage par injection comprenant :
une partie mobile (60) agencée sur une base d'appareil d'injection (72) qui est mobile par rapport à un support de la machine de moulage (50) ;
un actionneur hydraulique (74) fixé à la partie mobile (60) ;
une unité de pompe hydraulique (100) fixée à ladite partie mobile (60) de sorte à fournir une pression générée par un fluide à l'actionneur hydraulique (74) ; et
un passage hydraulique (76A, 76B) prévu pour ladite partie mobile (60) de sorte à connecter ladite unité de pompe hydraulique (100) et ledit actionneur hydraulique (74),
dans lequel ledit actionneur hydraulique (74), ladite unité de pompe hydraulique (100) et ledit passage hydraulique (76A, 76B) se déplacent avec un déplacement de ladite partie mobile (60),
**caractérisée en ce que**
ladite partie mobile (60) est un appareil d'injection, et ledit actionneur hydraulique (74) est un cylindre hydraulique qui est une source d'entraînement d'un mécanisme mobile qui déplace l'appareil d'injection (60), et dans lequel ladite unité de pompe hydraulique (100) peut être pivotée avec l'appareil d'injection (60) par rapport à la base d'appareil d'injection (72) .

2. Machine de moulage par injection selon la revendication 1, dans laquelle ladite unité de pompe hydraulique (100) est une unité unique dans laquelle une pompe hydraulique (120) entraînée par un moteur électrique (111) et un réservoir (125) stockant un fluide de traitement évacué de la pompe hydraulique (120) sont intégrés.

3. Machine de moulage par injection selon la revendication 1 ou 2, dans laquelle l'appareil d'injection (60) a un élément d'injection (63) qui est adapté pour injecter un matériau de moulage dans un moule (81, 83), et a une pluralité desdits actionneurs hydrauliques (74) fixés en une pluralité de positions qui sont des positions symétriques par rapport à l'élément d'injection qui sont des positions symétriques par rapport à l'élément d'injection (63).

4. Machine de moulage par injection selon la revendication 2, dans laquelle ledit moteur électrique (428) peut tourner dans les deux directions, et ledit passage hydraulique (430, 432) comporte :
un premier passage du fluide de traitement (430) connecté entre ladite unité de pompe hydraulique (424, 428, 434) et ledit actionneur hydraulique (420) de sorte à déplacer ledit appareil d'injection (402) dans une direction orientée vers ledit moule (406, 410) en fournissant un fluide de traitement sortant de ladite unité de pompe hydraulique (424, 428, 434) audit actionneur hydraulique (420) ; et
un deuxième passage du fluide de traitement (432) connecté entre ladite unité de pompe hydraulique (424) et ledit actionneur hydraulique (420) de sorte à déplacer ledit appareil d'injection (402) dans une direction distincte dudit moule (406, 410) en fournissant un fluide de traitement sortant de ladite unité de pompe hydraulique (424, 428, 434) audit actionneur hydraulique (420),
la machine de moulage par injection comprenant en outre :
une soupape de commutation (438) prévue pour ledit premier passage du fluide traitement (430) de sorte à commander un écoulement du fluide de traitement en ouvrant et fermant ledit premier passage du fluide traitement (430) ; et
un dispositif de commande (426) qui est configuré pour commander des fonctionnements de ladite unité de pompe hydraulique (424, 428, 434) et de ladite soupape de commutation (438).

5. Machine de moulage par injection selon la revendication 4, comprenant en outre un détecteur de pression (436) pour détecter une pression du fluide de traitement entre ladite soupape de commutation (438) et ledit actionneur hydraulique (420) et pour fournir un signal de détection audit dispositif de commande (426), et dans lequel ledit dispositif de commande (426) est configuré pour commander le fonctionnement de ladite soupape de commutation (438) sur la base du signal de détection de sorte que la pression détectée par ledit détecteur de pression (436) est réglée à une valeur de réglage réglée par un dispositif d'entrée.

6. Machine de moulage par injection selon la revendication 4 ou 5, dans laquelle ladite soupape de commutation (438) a une fonction de clapet anti-retour pour un écoulement du fluide de traitement depuis ladite unité de pompe hydraulique (424, 428, 434) vers ledit actionneur hydraulique (420).

7. Machine de moulage par injection selon la revendication 2, dans laquelle ledit moteur électrique (428A) est un servomoteur, et ledit passage hydraulique (430, 432) comporte :
un premier passage du fluide de traitement (430) connecté entre ladite unité de pompe hydraulique (424, 428A, 434) et ledit actionneur hydraulique (420) de sorte à déplacer ledit appareil d'injection (402) dans une direction orientée vers ledit moule (406, 410) en fournissant un fluide de traitement sortant de ladite unité de pompe hydraulique (424, 428A, 434) audit actionneur hydraulique (420) ; et
un deuxième passage du fluide de traitement (432) connecté entre ladite unité de pompe hydraulique (424, 428A, 434) et ledit actionneur hydraulique (420) de sorte à déplacer ledit appareil d'injection (402) dans une direction distincte dudit moule (406, 410) en fournissant un fluide de traitement sortant de ladite unité de pompe hydraulique (424, 428A, 434) audit actionneur hydraulique (420),
la machine de moulage par injection comprenant en outre :
un détecteur de pression (436) adapté pour détecter une force de pression appliquée à un moule (406, 410) à partir de ladite partie mobile (402) de sorte à fournir un signal de détection ; et
un dispositif de commande (426) qui est configuré pour commander un fonctionnement dudit servomoteur (428A) entraînant ladite unité de pompe hydraulique (424, 428A, 434) sur la base du signal de détection.

8. Machine de moulage par injection selon la revendication 7, comprenant en outre une soupape de commutation (448) pour ouvrir et fermer ledit premier passage du fluide traitement (430), et dans lequel ledit dispositif de commande (426) est configuré pour commander des fonctionnements de ladite unité de pompe hydraulique (424, 428A, 434) et de ladite soupape de commutation (448) sur la base dudit signal de détection, et ladite soupape de commutation (448) a une fonction de clapet anti-retour pour un écoulement du fluide de traitement depuis ladite unité de pompe hydraulique (424, 428A, 434) vers ledit actionneur hydraulique (420).

9. Machine de moulage par injection selon la revendication 8, dans laquelle ledit dispositif de commande (426) est configuré pour commander le fonctionnement de ladite soupape de commutation (448) sur la base dudit signal de détection de sorte que la pression détectée par ledit détecteur de pression (436) est réglée à une valeur de réglage réglée par un dispositif d'entrée.

10. Machine de moulage par injection selon la revendication 5 ou 9, dans laquelle ladite valeur de réglage contient au moins deux valeurs de réglage qui sont une valeur de réglage haute pression et une valeur de réglage basse pression.

11. Machine de moulage par injection selon la revendication 10, dans laquelle ledit dispositif de commande (426) est configuré pour mettre en œuvre une commande en utilisant ladite valeur de réglage basse pression après la fin d'un traitement de mesure ou pendant un traitement de refroidissement.

12. Machine de moulage par injection selon la revendication 10, dans laquelle ledit dispositif de commande (426) est configuré pour mettre en œuvre une commande en utilisant ladite valeur de réglage haute pression pendant un traitement de remplissage.

13. Machine de moulage par injection selon la revendication 5 ou 9, dans laquelle ledit dispositif de commande (426) est configuré pour calculer ladite valeur de réglage sur la base d'au moins une valeur parmi une valeur de spécification d'une vis (412), une valeur de pression de remplissage détectée et une valeur de contre-pression détectée.

14. Machine de moulage par injection selon la revendication 4 ou 8, dans laquelle ledit dispositif de commande (426) est configuré pour mettre en œuvre au moins une commande parmi une commande d'un mouvement de recul dudit appareil d'injection (402) et une commande à basse pression d'une pression de contact de buse après qu'un temps prédéterminé a passé depuis un début d'un traitement de refroidissement.

15. Machine de moulage par injection selon la revendication 4 ou 8, dans laquelle ledit dispositif de commande (426) est configuré pour mettre en œuvre au moins une commande parmi une commande d'un mouvement de recul dudit appareil d'injection (402) et une commande à basse pression d'une pression de contact de buse après qu'un temps prédéterminé a passé depuis un début d'un traitement de mesure.

16. Machine de moulage par injection selon la revendication 7, dans laquelle ledit servomoteur (428A) de ladite unité de pompe hydraulique (424, 428A, 434) est un servomoteur réversible, et ladite pompe hydraulique (424) a un premier orifice d'aspiration et d'échappement (424a) auquel ledit premier passage de traitement du fluide (430) est connecté et un deuxième orifice d'aspiration et d'échappement (424b) auquel ledit deuxième passage de traitement du fluide (432) est connecté, et une direction de rotation et une vitesse de rotation dudit servomoteur (428A) sont commandées par ledit dispositif de commande (426).
